(19) **Europäisches Patentamt / European Patent Office / Office européen des brevets**

(11) **EP 4 667 965 A1**

(12) **EUROPEAN PATENT APPLICATION**
published in accordance with Art. 153(4) EPC

(43) Date of publication:
24.12.2025 Bulletin 2025/52

(21) Application number: 23922834.9

(22) Date of filing: 22.09.2023

(51) International Patent Classification (IPC):
*G01S 7/481* (2006.01)     *G01S 7/497* (2006.01)

(52) Cooperative Patent Classification (CPC):
G01S 7/481; G01S 7/497

(86) International application number:
PCT/JP2023/034454

(87) International publication number:
WO 2024/171500 (22.08.2024 Gazette 2024/34)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 14.02.2023 JP 2023021054
19.09.2023 JP 2023151638

(71) Applicant: DENSO CORPORATION
Kariya-city, Aichi 448-8661 (JP)

(72) Inventor: AOKI Keishin
Kariya- city Aichi 4488661 (JP)

(74) Representative: Kuhnen & Wacker
Patent- und Rechtsanwaltsbüro PartG mbB
Prinz-Ludwig-Straße 40A
85354 Freising (DE)

(54) **OPTICAL SENSOR AND MANUFACTURING METHOD**

(57) An optical sensor includes a light source module (22) having a projection-positioning surface (222) and projecting a projected beam (Bp) from a light-emitting surface (226). It also includes a projection lens module (26) having a projection-adhesive surface (264) bonded to the light source module (22), and guiding the projected beam from the light source module (22) to the external environment along a projection optical axis (Op). The sensor base (14) includes a light-emitting base surface (142) to position the projection-positioning surface (222) along a Y-axis. A projection adjustment direction (Dp) perpendicular to an X-axis is assumed to be along the projection-adhesive surface (264). The projection optical axis on an XZ-plane perpendicular to the light-emitting base surface (142) in a three-dimensional coordinate system is adjusted by displacing an optical center (Cp) of the light-emitting surface (226) of the light source module (22) relative to a principal point (Pp) of the projection lens module (26) in the projection adjustment direction.

**FIG. 7**

**Description**

CROSS REFERENCE TO RELATED APPLICATIONS

This application is based upon and claims the benefit of priority from Patent Application No. 2023-021054 filed in Japan on February 14, 2023 and Patent Application No. 2023-151638 filed in Japan on September 19, 2023, the entire contents of which are incorporated herein by reference.

TECHNICAL FIELD

The present disclosure relates to an optical sensor and a manufacturing method of the optical sensor.

BACKGROUND

Conventional optical sensors are widely known for detecting an external environment by projecting a light beam toward the external environment and receiving a reflected beam from the field in response to the projected beam. In the technology disclosed in Patent Literature 1 as this type of optical sensor, an optical axis of a lens module that guides a projected beam from a light source module to the external environment is adjusted in position relative to the light source module that generates the projected beam.

PRIOR ART LITERATURE

PATENT LITERATURE

Patent Literature 1: JP2017-003938A

SUMMARY OF THE INVENTION

However, in the technique disclosed in Patent Literature 1, the lens module is aligned with respect to the light source module in only three axial directions. With such alignment techniques, absorption of manufacturing tolerances such as tilt within each module and between modules is difficult. Therefore, there is a limit to the precision with which the optical axis can be adjusted.

In view of the above, an issue of the present disclosure is to provide an optical sensor that ensures adjustment accuracy of an optical axis and a manufacturing method of the optical axis.

Hereinafter, technical means of the present disclosure for solving the issue will be described.

According to a first aspect of the present disclosure, a three-dimensional coordinate system is defined by an X-axis, a Y-axis, and a Z-axis. An optical sensor detects an external environment by projecting a projected beam toward the external environment and receiving a reflected beam that is reflected from the external environment in response to the projected beam. A light source module has a projection-positioning surface and projects the projected beam from a light-emitting surface. A projection lens module has a projection-adhesive surface bonded to the light source module, and guides the projected beam from the light source module to the external environment along a projection optical axis. A sensor base has a light-emitting base surface that positions the projection-positioning surface along the Y-axis. A projection adjustment direction is perpendicular to the X-axis and is along the projection-adhesive surface. The projection optical axis on an XZ-plane, perpendicular to the light-emitting base surface in the three-dimensional coordinate system, is adjusted by displacing an optical center of the light-emitting surface of the light source module relative to a principal point of the projection lens module in the projection adjustment direction.

A second aspect of the present disclosure is a manufacturing method for manufacturing the optical sensor. The manufacturing method includes measuring an attitude angle (attitude angle deviation) between the projection-positioning surface and the projection-adhesive surface around the X-axis in a focused state of the projected beam. The method also includes bonding the projection-adhesive surface of the projection lens module to the light source module. This bonding occurs in a state in which an optical center of the light-emitting surface is displaced with respect to a principal point of the projection lens module in the projection adjustment direction by a deviation amount correlated to a measurement value of the attitude angle. The method further includes fixing the projection-positioning surface of the light source module, to which the projection lens module is bonded, to the sensor base by positioning the projection-positioning surface using the light-emitting base surface.

Thus, in the first and second aspects, the projection-positioning surface of the light source module bonded to the projection-adhesive surface of the projection lens module is positioned along the Y-axis by the light-emitting base surface of the sensor base. Therefore, the optical center of the light-emitting surface in the light source module is shifted along the projection-adhesive surface in the projection adjustment direction perpendicular to the X-axis relative to the principal point of the projection lens module, and the projection optical axis is adjusted on the XZ-plane perpendicular to the light-emitting base surface. According to such a displacement configuration, it is possible to adjust the projection optical axis in accordance with the XZ-plane while absorbing manufacturing tolerances including tilt within each module and between each module. Therefore, the adjustment accuracy of the projection optical axis can be ensured.

Furthermore, in the second aspect, in the light source module to which the projection-adhesive surface of the projection lens module is adhered, the projection-positioning surface is positioned by the light-emitting base surface and fixed to the sensor base. Therefore, the modules are bonded to each other before being fixed to the sensor base, in a state in which the optical center of the light-emitting surface is displaced in the projection adjustment direction relative to the principal point of the light-projection lens module by the deviation amount that correlates to a measured value that measures the attitude angle deviation $\omega p$ around the X-axis of the projection-positioning surface relative to the projection-adhesive surface. In other words, this means that the attitude angle deviation of the projection-positioning surface relative to the projection-adhesive surface can be an appropriate angle corresponding to the deviation amount for forming the light-projection optical axis aligned with the XZ-plane. Therefore, the projection optical axis can be adjusted with high precision.

A third aspect of the present disclosure is that the optical sensor of the first aspect further includes a light-receiving detection module having a receiving-positioning surface and detecting the external environment by receiving the reflected beam on a detection surface. The sensor also includes a light-receiving lens module having a receiving-adhesive surface that is adhered to the light-receiving detection module, and guiding the reflected beam from the external environment to the light-receiving detection module along a light-receiving axis. The sensor base has a light-receiving base surface that positions the receiving-positioning surface along the Y-axis. A light-receiving adjustment direction perpendicular to the X-axis is assumed to be along the receiving-adhesive surface. The light-receiving axis on the XZ-plane, perpendicular to the light-receiving base surface in the three-dimensional coordinate system, is adjusted by displacing an optical center of the detection surface in the light-receiving detection module relative to a principal point of the light-receiving lens module in the light-receiving adjustment direction.

According to a fourth aspect of the present disclosure, an optical sensor detects an external environment by projecting a projected beam toward the external environment and receiving a reflected beam that is reflected from the external environment in response to the projected beam. A three-dimensional coordinate system is defined by an X-axis, a Y-axis, and a Z-axis. The optical sensor includes a light-receiving detection module having a receiving-positioning surface and detecting the external environment by receiving the reflected beam on a detection surface. The sensor also includes a light-receiving lens module having a receiving-adhesive surface that is bonded to the light-receiving detection module, and guiding the reflected beam from the external environment to the light-receiving detection module along a light-receiving axis. The sensor base has a light-receiving base surface that positions the receiving-positioning surface along the Y-axis. A light-receiving adjustment direction perpendicular to the X-axis is assumed to be along the receiving-adhesive surface. The light-receiving axis on the XZ-plane, perpendicular to the light-receiving base surface in the three-dimensional coordinate system, is adjusted by displacing an optical center of the detection surface in the light-receiving detection module relative to a principal point of the light-receiving lens module in the light-receiving adjustment direction.

A fifth aspect of the present disclosure is a method for manufacturing the optical sensor of the third or fourth aspect, the manufacturing method includes measuring an attitude angle (attitude angle deviation) between the receiving-positioning surface and the receiving-adhesive surface around the X-axis in a focused state of the reflected beam. The method also includes bonding the receiving-adhesive surface of the light-receiving lens module to the light-receiving detection module. This bonding occurs in a state in which the optical center of the detection surface is displaced with respect to the principal point of the light-receiving lens module in the light-receiving adjustment direction by a deviation amount correlated to the measured value of the attitude angle. The method further includes fixing the receiving-positioning surface of the light-receiving detection module, to which the light-receiving lens module is bonded, to the sensor base by positioning the receiving-positioning surface using the light-receiving base surface.

In these third to fifth aspects, the receiving-positioning surface of the light-receiving detection module boded to the receiving-adhesive surface of the light-receiving lens module is positioned along the Y-axis by the light-receiving base surface of the sensor base. Therefore, the optical center of the detection surface in the light-receiving detection module is shifted along the receiving-adhesive surface in the light-receiving adjustment direction perpendicular to the X-axis relative to the principal point of the light-receiving lens module, and the light-receiving axis is adjusted on the XZ-plane perpendicular to the light-receiving base surface. According to such a displacement configuration, it is possible to adjust the light-receiving axis to match the XZ-plane while absorbing manufacturing tolerances including tilt within each module and between each module. Therefore, the adjustment accuracy of the light-receiving axis can be ensured.

Furthermore, in the manufacturing method of the fifth aspect, in the light-receiving detection module to which the receiving-adhesive surface of the light-receiving lens module is adhered, the receiving-positioning surface is positioned by the light-receiving base surface and fixed to the sensor base. Therefore, according to the fifth aspect, the modules are adhered to each other before being fixed to the sensor base, with the optical center of the detection surface displaced in the light-receiving adjustment direction relative to the principal point of the light-receiving lens module by that deviation amount that correlates with the measured value measuring the attitude angle deviation around the X-axis of the receiving-positioning surface relative to the receiving-adhesive surface. In other words, this means that the attitude angle deviation of the receiving-positioning surface relative to the receiving-adhesive surface can be an appropriate angle corresponding to the deviation amount for forming the light-receiving axis aligned with the XZ-plane. Therefore, the light-receiving axis can be adjusted with high precision.

According to a sixth aspect of the present disclosure, a three-dimensional coordinate system is defined by an X-axis, a Y-axis, and a Z-axis. An optical sensor detects an external environment by projecting a projected beam toward the external environment and receiving a reflected beam that is reflected from the external environment in response to the projected beam. A light source module has a projection-positioning surface and projects the projected beam from a light-emitting surface. A projection lens module has a projection-adhesive surface bonded to the light source module, and guides the projected beam from the light source module to the external environment along a projection optical axis. A sensor base has a light-emitting base surface that positions the projection-positioning surface along the Y-axis. A projection adjustment direction is perpendicular to the X-axis and is along the projection-adhesive surface. The projection optical axis on a projection-reference plane, perpendicular to the YZ-plane in the three-dimensional coordinate system, is adjusted by displacing an optical center of the light-emitting surface of the light source module relative to a principal point of the projection lens module in the projection adjustment direction.

Thus, in the sixth aspect, the projection-positioning surface of the light source module bonded to the projection-adhesive surface of the projection lens module is positioned by the light-emitting base surface of the sensor base along the Y-axis. Therefore, the optical center of the light-emitting surface in the light source module is shifted along the projection-adhesive surface in the projection adjustment direction perpendicular to the X-axis relative to the principal point of the projection lens module, and the projection optical axis is adjusted on the projection-reference plane perpendicular to the YZ-plane. According to such a displacement configuration, it is possible to adjust the projection optical axis in accordance with the projection-reference plane while absorbing manufacturing tolerances including tilt within each module and between each module. Therefore, the adjustment accuracy of the projection optical axis can be ensured.

A seventh aspect of the present disclosure is that the optical sensor of the sixth aspect further includes a light-receiving detection module having a receiving-positioning surface and detecting the external environment by receiving the reflected beam on a detection surface. The sensor also includes a light-receiving lens module having a receiving-adhesive surface that is bonded to the light-receiving detection module and guiding the reflected beam from the external environment to the light-receiving detection module along a light-receiving axis. The sensor base has a light-receiving base surface along the Y-axis for positioning the receiving-positioning surface. A light-receiving adjustment direction perpendicular to the X-axis is assumed to be along the receiving-adhesive surface. The light-receiving axis on a light-receiving reference plane perpendicular to the YZ-plane in the three-dimensional coordinate system is adjusted by displacing an optical center of the detection surface in the light-receiving detection module relative to a principal point of the light-receiving lens module in the light-receiving adjustment direction.

According to a fourth aspect of the present disclosure, an optical sensor detects an external environment by projecting a projected beam toward the external environment and receiving a reflected beam that is reflected from the external environment in response to the projected beam. A three-dimensional coordinate system is defined by an X-axis, a Y-axis, and a Z-axis. The optical sensor includes a light-receiving detection module having a receiving-positioning surface and detecting the external environment by receiving the reflected beam on a detection surface. The sensor also includes a light-receiving lens module having a receiving-adhesive surface that is bonded to the light-receiving detection module and guiding the reflected beam from the external environment to the light-receiving detection module along a light-receiving axis. The sensor base has a light-receiving base surface along the Y-axis for positioning the receiving-positioning surface. A light-receiving adjustment direction perpendicular to the X-axis is assumed to be along the receiving-adhesive surface. The light-receiving axis on a light-receiving reference plane perpendicular to a YZ-plane in the three-dimensional coordinate system is adjusted by displacing an optical center of the detection surface in the light-receiving detection module relative to a principal point of the light-receiving lens module in the light-receiving adjustment direction.

In these seventh and eighth aspects, the receiving-positioning surface of the light-receiving detection module boded to the receiving-adhesive surface of the light-receiving lens module is positioned along the Y-axis by the light-receiving base surface of the sensor base. Therefore, the optical center of the detection surface in the light-receiving detection module is shifted along the receiving-adhesive surface in the light-receiving adjustment direction perpendicular to the X-axis relative to the principal point of the light-receiving lens module, and the light-receiving axis is adjusted on the light-receiving reference plane perpendicular to the YZ-plane. According to such a displacement configuration, it is possible to adjust the light-receiving axis to match the light-receiving reference plane while absorbing manufacturing tolerances including tilt within each module and between each module. Therefore, the adjustment accuracy of the light-receiving axis can be ensured.

A ninth aspect of the present disclosure is that the optical sensor of the seventh aspect further includes a positioning shim interposed in at least one of a light-projecting positioning location and a light-receiving positioning location. The light-projecting positioning location is between the projection-positioning surface and the light-emitting base surface so that the projection optical axis and the light-receiving axis are aligned with each other in the three-dimensional coordinate system. The light-receiving positioning location is between the receiving-positioning surface and the light-receiving base surface so that the projection optical axis and the light-receiving axis are aligned with each other in the three-dimensional coordinate system.

Thus, in the ninth aspect, a positioning shim is interposed at least at one of the light-projecting positioning location between the projection-positioning surface and the light-emitting base surface and the light-receiving positioning location between the receiving-positioning surface and the light-receiving base surface. According to this, even if an error angle occurs in the projection optical axis and/or the light-receiving axis due to the manufacturing tolerance of the deviation configuration caused by the curing shrinkage during bonding, the directions of those optical axes can be aligned with each other to absorb the manufacturing tolerance. Therefore, the adjustment accuracy between the projection optical axis and the light-receiving axis can be ensured.

A tenth aspect of the present disclosure is a method for manufacturing the optical sensor of the ninth aspect, and the manufacturing method includes measuring a projection-attitude angle (projection-attitude angle deviation) between the projection-positioning surface and the projection-adhesive surface around the X-axis in a focused state of the projected beam. The method also includes bonding the projection-adhesive surface of the projection lens module to the light source module via projection adhesive in a state in which an optical center of the light-emitting surface is displaced with respect to a principal point of the projection lens module in the projection adjustment direction by a deviation amount correlated to a measurement value of the projection-attitude angle. The method further includes measuring a projection error angle in the three-dimensional coordinate system on the projection optical axis of the projection lens module bonded to the light source module by hardening of the projection adhesive. Additionally, the method includes measuring a receiving-attitude angle between the receiving-positioning surface and the receiving-adhesive surface around the X-axis in a focused state of the reflected beam. The method includes bonding the receiving-adhesive surface of the light-receiving lens module to the light-receiving detection module via light-receiving adhesive in a state in which the optical center of the detection surface is displaced with respect to the principal point of the light-receiving lens module in the light-receiving adjustment direction by a deviation amount correlated to the measured value of the receiving-attitude angle. The method also includes measuring a light-receiving error angle in the three-dimensional coordinate system with respect to the light-receiving axis of the light-receiving lens module bonded to the light-receiving detection module by hardening of the light-receiving adhesive. The method further includes adjusting a wedge angle of a light-receiving positioning shim, which is a positioning shim interposed at the light-receiving positioning location so that the projection optical axis and the light-receiving axis are aligned with each other, in accordance with a correlation between the projection error angle and the light-receiving error angle. The method includes fixing the projection-positioning surface of the light source module to which the projection lens module is bonded to the sensor base by positioning the projection-positioning surface using the light-emitting base surface. Finally, the method includes fixing the receiving-positioning surface of the light-receiving detection module to which the light-receiving lens module is bonded to the sensor base by positioning the receiving-positioning surface by the light-receiving positioning shim using the light-receiving base surface.

In this tenth aspect, the modules are bonded to each other in a state of a displacement configuration in which the optical center of the light-emitting surface is displaced in the projection adjustment direction relative to the principal point of the projection lens module by the deviation amount that correlates with the measured value that measures the projection-attitude angle deviation in accordance with the second aspect. In addition, in the tenth aspect, the modules are bonded each other in a displacement configuration in which the optical center of the detection surface is displaced in the light-receiving adjustment direction relative to the principal point of the light-receiving lens module by the deviation amount that correlates with the measured value of the light-receiving attitude angle deviation measured in accordance with the fifth aspect.

However, in the manufacturing method of the fifth aspect, even if the projection error angle on the projection optical axis of the projection lens module that is bonded to the projector light source module by the hardening of the projection adhesive, the projection error angle corresponding to the manufacturing tolerance caused by the hardening shrinkage the projection adhesive, can be measured. At the same time, even if a light-receiving error angle on the light-receiving axis of the light-receiving lens module adhered to the light-receiving detection module due to the hardening of the light-receiving adhesive, the light-receiving error angle corresponding to the manufacturing tolerance caused by the hardening shrinkage of the light-receiving adhesive can be measured. From these, in order to align the directions of the projection optical axis and the light-receiving axis with each other, the wedge angle of the light-receiving positioning shim can be accurately adjusted according to a correlation between the projection error angle and the light-receiving error angle.

According to the manufacturing method of the tenth aspect, the projection-positioning surface is positioned and fixed directly by the light-emitting base surface, while the receiving-positioning surface is positioned and fixed by the light-receiving base surface via the light-receiving positioning shim. Therefore, the adjustment accuracy of the projection optical axis and the light-receiving axis can be ensured by matching the directions of these optical axes.

An eleventh aspect of the present disclosure is a method for manufacturing the optical sensor of the ninth aspect, the manufacturing method includes measuring a projection-attitude angle (projection-attitude angle deviation) between the projection-positioning surface and the projection-adhesive surface around the X-axis in a focused state of the projected beam. The method also includes bonding the projection-adhesive surface of the projection lens module to the light source module via projection adhesive in a state in which an optical center of the light-emitting surface is displaced with respect to a principal point of the projection lens module in the projection adjustment direction by a deviation amount correlated to a measurement value of the projection-attitude angle. The method further includes measuring a projection error angle in the three-dimensional coordinate system on the projection optical axis of the projection lens module bonded to the light source module by hardening of the projection adhesive. Additionally, it includes measuring a receiving-attitude angle between the receiving-positioning surface and the receiving-adhesive surface around the X-axis in a focused state of the reflected beam. The method then includes bonding the receiving-adhesive surface of the light-receiving lens module to the light-receiving detection module via light-receiving adhesive in a state in which the optical center of the detection surface is displaced with respect to the principal point of the light-receiving lens module in the light-receiving adjustment direction by a deviation amount correlated to the measured value of the receiving-attitude angle. The method also includes measuring a light-receiving error angle in the three-dimensional coordinate system with respect to the light-receiving axis of the light-receiving lens module bonded to the light-receiving detection module by hardening of the light-receiving adhesive. The method includes adjusting a wedge angle of a light-projecting positioning shim, which is a positioning shim interposed at the light-projecting positioning location so that the projection optical axis and the light-receiving axis are aligned with each other, in accordance with a correlation between the projection error angle and the light-receiving error angle. Finally, the method includes fixing the projection-positioning surface of the light source module to which the projection lens module is bonded to the sensor base by positioning the projection-positioning surface by the light-projecting positioning shim using the light-emitting base surface, and fixing the receiving-positioning surface of the light-receiving detection module to which the light-receiving lens module is bonded to the sensor base by positioning the receiving-positioning surface using the light-receiving base surface.

In this eleventh aspect, the modules are bonded to each other in a state of a displacement configuration in which the optical center of the light-emitting surface is displaced in the projection adjustment direction relative to the principal point of the projection lens module by the deviation amount that correlates with the measured value that measures the attitude angle deviation in accordance with the second aspect. In addition, in the eleventh aspect, the modules are bonded each other in a displacement configuration in which the optical center of the detection surface is displaced in the light-receiving adjustment direction relative to the principal point of the light-receiving lens module by the deviation amount that correlates with the measured value of the receiving attitude angle deviation measured in accordance with the fifth aspect.

However, in the manufacturing method of the eleventh aspect, even if the projection error angle on the projection optical axis of the projection lens module that is bonded to the projector light source module by the hardening of the projection adhesive, the projection error angle corresponding to the manufacturing tolerance caused by the hardening shrinkage the projection adhesive, can be measured. At the same time, even if a light-receiving error angle on the light-receiving axis of the light-receiving lens module adhered to the light-receiving detection module due to the hardening of the light-receiving adhesive, the light-receiving error angle corresponding to the manufacturing tolerance caused by the hardening shrinkage of the light-receiving adhesive can be measured. From these, in order to align the directions of the projection optical axis and the light-receiving axis with each other, the wedge angle of the light-projecting positioning shim can be accurately adjusted according to a correlation between the projection error angle and the light-receiving error angle.

According to the manufacturing method of the eleventh aspect, the receiving-positioning surface is positioned and fixed directly by the light-receiving base surface, while the projection-positioning surface is positioned and fixed by the light-emitting base surface via the light-projecting positioning shim. Therefore, the adjustment accuracy of the projection optical axis and the light-receiving axis can be ensured by matching the directions of these optical axes.

A twelfth aspect of the present disclosure is a method for manufacturing the optical sensor of the ninth aspect, the manufacturing method includes measuring a projection-attitude angle (projection-attitude angle deviation) between the projection-positioning surface and the projection-adhesive surface around the X-axis in a focused state of the projected beam. The method also includes bonding the projection-adhesive surface of the projection lens module to the light source module via projection adhesive in a state in which an optical center of the light-emitting surface is displaced with respect to a principal point of the projection lens module in the projection adjustment direction by a deviation amount correlated to a measurement value of the projection-attitude angle. The method further includes measuring a projection error angle in the three-dimensional coordinate system on the projection optical axis of the projection lens module bonded to the light source module by hardening of the projection adhesive. Additionally, it includes measuring a receiving-attitude angle between the receiving-positioning surface and the receiving-adhesive surface around the X-axis in a focused state of the reflected beam. The method then includes bonding the receiving-adhesive surface of the light-receiving lens module to the light-receiving detection module via light-receiving adhesive in a state in which the optical center of the detection surface is displaced with respect to the principal point of the light-receiving lens module in the light-receiving adjustment direction by a deviation amount correlated to the measured value of the receiving-attitude angle. The method also includes measuring a light-receiving error angle in the three-dimensional coordinate system with respect to the light-receiving axis of the light-receiving lens module bonded to the light-receiving detection module by hardening of the light-receiving adhesive. The method includes adjusting a wedge angle of a light-projecting positioning shim, which is a positioning shim interposed at the light-projecting positioning location so that the projection optical axis and the light-receiving axis are aligned with each other, in accordance with the projection error angle. The method further includes adjusting a wedge angle of a light-receiving positioning shim, which is a positioning shim interposed at the light-receiving positioning location so that the projection optical axis and the light-receiving axis are aligned with each other, in accordance with the light-receiving error angle. Finally, the method includes fixing the projection-positioning surface of the light source module to which the projection lens module is bonded to the sensor base by positioning the projection-positioning surface by the light-projecting positioning shim using the light-emitting base surface. The method also includes fixing the receiving-positioning surface of the light-receiving detection module to which the light-receiving lens module is bonded to the sensor base by positioning the receiving-positioning surface by the light-receiving positioning shim using the light-receiving base surface.

In this twelfth aspect, the modules are bonded to each other in a state of a displacement configuration in which the optical center of the light-emitting surface is displaced in the projection adjustment direction relative to the principal point of the projection lens module by the deviation amount that correlates with the measured value that measures the attitude angle deviation in accordance with the second aspect. In addition, in the twelfth aspect, the modules are bonded each other in a displacement configuration in which the optical center of the detection surface is displaced in the light-receiving adjustment direction relative to the principal point of the light-receiving lens module by the deviation amount that correlates with the measured value of the receiving attitude angle deviation measured in accordance with the fifth aspect.

However, in the manufacturing method of the twelfth aspect, even if the projection error angle on the projection optical axis of the projection lens module that is bonded to the projector light source module by the hardening of the projection adhesive, the projection error angle corresponding to the manufacturing tolerance caused by the hardening shrinkage the projection adhesive, can be measured. At the same time, even if a light-receiving error angle on the light-receiving axis of the light-receiving lens module adhered to the light-receiving detection module due to the hardening of the light-receiving adhesive, the light-receiving error angle corresponding to the manufacturing tolerance caused by the hardening shrinkage of the light-receiving adhesive can be measured. From these facts, in order to align the directions of the projection optical axis and the light-receiving axis with each other, the wedge angle of the light-projecting positioning shim and the wedge angle of the light-receiving positioning shim can be accurately adjusted in accordance with the projection error angle and the light-receiving error angle, respectively.

Therefore, according to the manufacturing method of the twelfth aspect, the projection-positioning surface is positioned and fixed by the light-emitting base surface via the light-projecting positioning shim, and the receiving-positioning surface is positioned and fixed by the light-receiving base surface via the light-receiving positioning shim. Therefore, the adjustment accuracy of the projection optical axis and the light-receiving axis can be ensured by matching the directions of these optical axes with each other.

BRIEF DESCRIPTION OF DRAWINGS

FIG. 1 is a schematic diagram illustrating an overall configuration of an optical sensor according to a first embodiment in partial cross-section.
FIG. 2 is a perspective view of a light-emitting unit according to the first embodiment.
FIG. 3 is a schematic XY-plane view of the light-emitting unit according to the first embodiment.
FIG. 4 is a perspective view of a light-receiving unit according to the first embodiment.
FIG. 5 is a schematic XY-plane view of the light-receiving unit according to the first embodiment.
FIG. 6 is a schematic YZ-plane view of a detailed configuration of the optical sensor according to the first embodiment in partial cross-section.
FIG. 7 is a schematic YZ-plane view of the light-emitting unit according to the first embodiment.
FIG. 8 is a flowchart showing a manufacturing method of the light-emitting unit according to the first embodiment.
FIG. 9 is a schematic diagram illustrating the manufacturing method of the light-emitting unit according to the first embodiment.
FIG. 10 is a schematic diagram illustrating the manufacturing method of the light-emitting unit according to the first embodiment.
FIG. 11 is a schematic diagram illustrating the manufacturing method of the light-emitting unit according to the first embodiment.
FIG. 12 is a schematic YZ-plane view of the light-receiving unit according to the first embodiment.
FIG. 13 is a flowchart showing a manufacturing method of the light-receiving unit according to the first embodiment.
FIG. 14 is a schematic diagram illustrating the manufacturing method of the light-receiving unit according to the first embodiment.
FIG. 15 is a schematic diagram illustrating the manufacturing method of the light-receiving unit according to the first embodiment.

FIG. 16 is a schematic diagram illustrating the manufacturing method of the light-receiving unit according to the first embodiment.

FIG. 17 is a schematic YZ-plane view of a detailed configuration of an optical sensor according to a second embodiment in partial cross-section.

FIG. 18 is a schematic YZ-plane view of a detailed configuration of an optical sensor according to a third embodiment in partial cross-section.

FIG. 19 is a schematic YZ-plane view of a light-emitting unit according to the third embodiment.

FIG. 20 is a schematic YZ-plane view of a light-receiving unit according to the third embodiment.

FIG. 21 is a flowchart showing a manufacturing method of the optical sensor according to the third embodiment.

FIG. 22 is a schematic diagram for explaining a light projection sequence in the manufacturing method of the optical sensor according to the third embodiment.

FIG. 23 is a schematic diagram for explaining the light projection sequence in the manufacturing method of the optical sensor according to the third embodiment.

FIG. 24 is a schematic diagram for explaining a light receiving sequence in the manufacturing method of the optical sensor according to the third embodiment.

FIG. 25 is a schematic diagram for explaining a light receiving sequence in the manufacturing method of the optical sensor according to the third embodiment.

FIG. 26 is a schematic YZ-plane view of a detailed configuration of an optical sensor according to a fourth embodiment in partial cross-section.

FIG. 27 is a schematic YZ-plane view of a light-emitting unit according to the fourth embodiment.

FIG. 28 is a schematic YZ-plane view of a light-receiving unit according to the fourth embodiment.

FIG. 29 is a flowchart showing a manufacturing method of the optical sensor according to the fourth embodiment.

FIG. 30 is a schematic YZ-plane view of a detailed configuration of an optical sensor according to a fifth embodiment in partial cross-section.

FIG. 31 is a schematic YZ-plane view of a light-emitting unit according to the fifth embodiment.

FIG. 32 is a schematic YZ-plane view of a light-receiving unit according to the fifth embodiment.

FIG. 33 is a flowchart showing a manufacturing method of the optical sensor according to the fifth embodiment.

DETAILED DESCRIPTION

First Embodiment

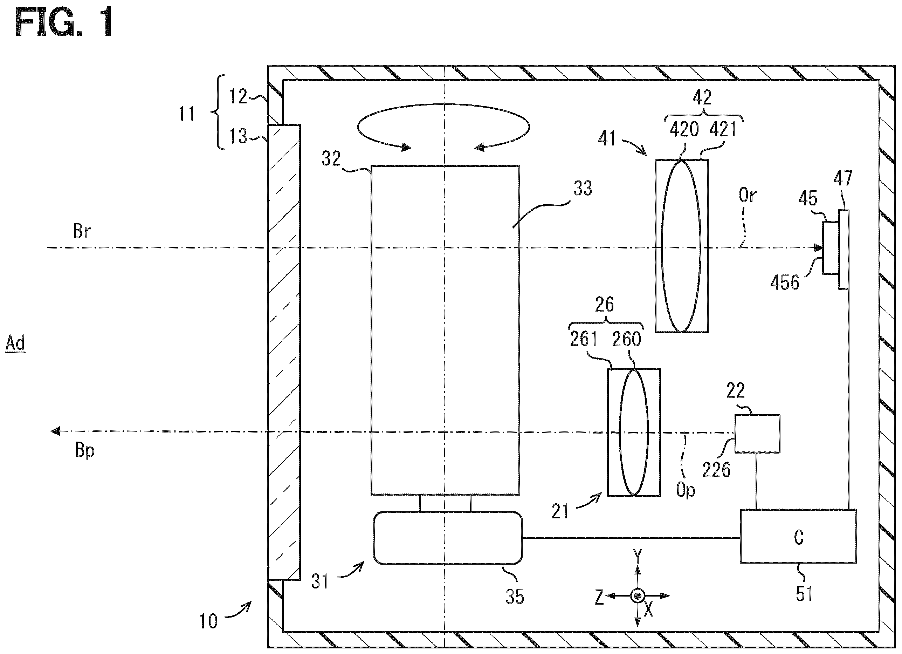

As shown in FIG. 1, an optical sensor 10 according to a first embodiment of the present disclosure is LiDAR (Light Detection and Ranging/Laser Imaging Detection and Ranging) which is placed on a moving object to optically observing an external environment. The moving object to which the optical sensor 10 is to be placed is a vehicle, such as a car, which is capable of at least one of the following types of operation: manual operation, automated driving, and remote operation. In the following description, unless otherwise specified, each direction indicated by a front, a rear, a top, a bottom, a left, and a right is defined with respect to the vehicle on a horizontal plane. In the following description, a horizontal direction and a vertical direction mean, respectively, parallel and perpendicular directions to the horizontal plane in the vehicle on the horizontal plane.

The optical sensor 10 is disposed in at least one of a front portion, left and right side portions, a rear portion, and an upper roof of the vehicle. The optical sensor 10 projects a projected beam Bp toward a detection area Ad corresponding to a location in the vehicle among the external environment. The optical sensor 10 detects a return light that is returned when the projected beam Bp is reflected by an object in the detection area Ad in the external environment, as a reflected beam Br. Light in the near-infrared region, which is difficult for people to see, is normally selected as the projected beam Bp, which becomes the reflected beam Br.

The optical sensor 10 detects an object in the detection area Ad out of the external environment by receiving the reflected beam Br that is reflected against the projected beam Bp. Such detection of external objects is, for example, one or more types of detection including at least distance from the optical sensor 10 to the object, a direction in which the object is located, and intensity of the reflected beam Br from the object. A typical observation target to be observed by the optical sensor 10 applied to the vehicle may be at least one type of moving object such as a pedestrian, a cyclist, an animal other than a human, or another vehicle. The typical target to be observed by the optical sensor 10 applied to the vehicle is at least one type of stationary object such as a guardrail, a road sign, a structure on a road side, or a fallen object on a road.

The optical sensor 10 has a three-dimensional coordinate system defined by an X, Y, and Z axes, which are three mutually orthogonal axes. In particular, in the three-dimensional coordinate system of the optical sensor 10, a Y-axis direction is defined along the vertical direction of the vehicle, and X-axis and Z-axis directions are defined along different horizontal directions of the vehicle, respectively. This means that for a vehicle on the horizontal plane, the XY and YZ-planes of the three-dimensional coordinate system are aligned with the vertical plane perpendicular to the horizontal plane, and the XZ-plane is aligned with the horizontal plane. In addition, in FIG. 1, the left part with respect to a dash-dot-dash line along the Y-axis (a part close to an optical window 13, which will be described later) is a cross section actually perpendicular to the right part with respect to the dashed-dotted line (a part close to unit 21, 41, which will be described later).

The optical sensor 10 has a housing 11, a light-emitting unit 21, a scanning unit 31, a light-receiving unit 41, and a control unit 51. The housing 11, which separates an inside from an outside, is configured to include a main body 12 and an optical window 13. The light-shielding main body 12 is formed in a box shape from, for example, metal or resin. The main body 12 accommodates the light-emitting unit 21, the scanning unit 31, the light-receiving unit 41, and the control unit 51 in the main body 12. The housing 11 has an opening that is closed by the optical window 13. The light-transmitting optical window 13 is formed in a plate shape and is made of, for example, resin or glass.

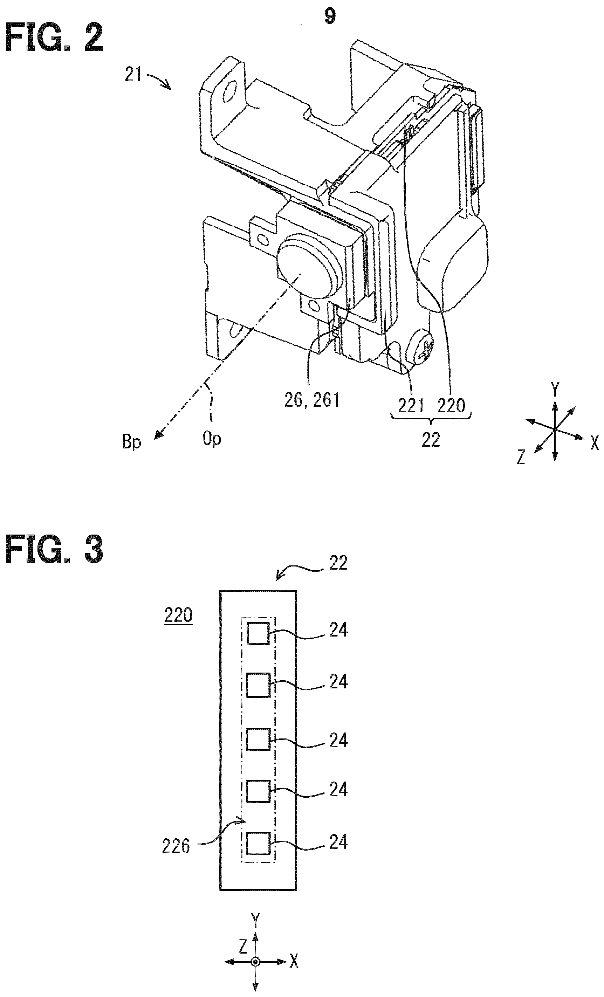

As shown in FIGS. 1 and 2, the light-emitting unit 21 includes a light source module 22 and a projection lens module 26. As shown in FIG. 3, the light source module 22 is constructed by mounting projection light sources 24 in an array on a substrate 220. In particular, each of the projection light sources 24 of the present embodiment is a laser diode, arranged in a single row, spaced apart from each other along the Y-axis direction. Each projection light source 24 generates pulsed laser light which is a part of the projected beam Bp in accordance with a control signal from the control unit 51. Each projection light source 24 may be an edge-emitter laser or a vertical cavity surface emitting laser (VCSEL).

As shown in FIGS. 1, 3, the light source module 22 has a light-emitting surface 226 formed on one side of the substrate 220, which projects the projected beam Bp by light emission from each of the projection light sources 24. The light-emitting surface 226 is defined by a collection of laser oscillators in each of the projection light sources 24 into a quasi-rectangular contour that is long in the Y-axis direction and short in the X-axis direction. The laser light projected from the laser oscillators of each projection light source 24 is projected from the light-emitting surface 226 as the projected beam Bp shaped into a vertically long line in the detection area Ad.

As shown in FIGS. 1, 2, the projection lens module 26 is constructed with at least one projection lens 260 held by a projection lens barrel 261. At least one projection lens 260 is mainly made of a light-transmitting base material such as resin or glass, and is formed into a lens shape according to the optical effect to be exerted. The projection lens 260 exerts at least one type of optical action, such as focusing, collimating, and shaping, on the projected beam Bp from the light source module 22. The projection lens 260 is positioned in the projection lens barrel 261 which is cylindrically formed from a light-shielding material, for example metal or resin.

The projection lens module 26 configured in this manner is aligned with the light source module 22 so as to form a projection optical axis Op. The projected beam Bp projected from the light source module 22 is guided to the external environment of the vehicle along the projection optical axis Op on the XZ-plane by the optical action of the projection lens module 26.

As shown in FIG. 1, the scanning unit 31 includes a scanning mirror 32 and a scanning motor 35. The scanning mirror 32 is formed into a plate shape by vapor deposition of a reflective film on a reflective surface 33, which is one side of a base material. The scanning mirror 32 is supported by the housing 11, which is capable of rotating freely around a center line of rotation along the Y-axis direction. The scanning mirror 32 swings within a driving range limited by a mechanical or electrical stopper. The scanning motor 35 is, for example, a voice coil motor, a DC motor with brushes, a stepping motor, or the like. An output shaft of the scanning motor 35 is coupled to the scanning mirror 32 directly or indirectly via a drive mechanism such as a speed reducer. The scanning motor 35 is held by the housing 11, which together with the output shaft is capable of rotating and driving the scanning mirror 32. The scanning motor 35 rotates or swings the scanning mirror 32 within a finite driving range according to a control signal from the control unit 51.

The scanning mirror 32 reflects the projected beam Bp incident from the light-emitting unit 21 by the reflective surface 33 and irradiates the light beam Bp through the optical window 13 onto the detection area Ad, thereby scanning the detection area Ad according to the rotation angle of the scanning motor 35. The scanning by the projected beam Bp to the detection area Ad is substantially limited to scanning in the horizontal direction in the present embodiment, according to the rotational drive of the scanning mirror 32.

The scanning mirror 32 reflects the reflected beam Br incident from a target in the detection area Ad through the optical window 13 toward the light-receiving unit 41 by the reflective surface 33 in accordance with the rotation angle of the scanning motor 35. Speeds of the projected beam Bp and the reflected beam Br are sufficiently large relative to the rotational speed of the scanning mirror 32. The reflected beam Br is then guided to the light-receiving unit 41 in a retrograde direction from the projected beam Bp by reflection action from the scanning mirror 32, whose angle to the projected beam Bp can be mimicked to be substantially the same rotation angle.

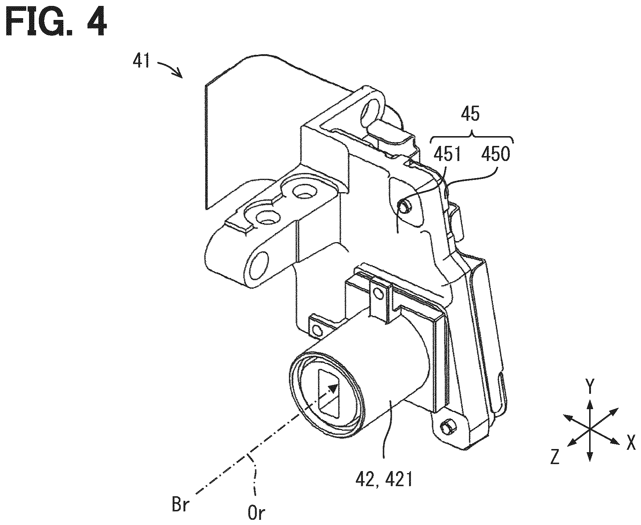

As shown in FIGS. 1 and 4, the light-receiving unit 41 includes a light-receiving lens module 42 and a light-receiving detection module 45. The light-receiving lens module 42 is built in a structure in which at least one light-receiving lens 420 is held by a light-receiving lens barrel 421. At least one light-receiving lens 420 is mainly made of a light-transmitting base material such as resin or glass, and is formed into a lens shape according to the optical effect to be exerted. The light-receiving lens 420 exerts an optical action so that the reflected beam Br from the scanning mirror 32 is formed into an image to the light-receiving detection module 45. The light-receiving lens 420 is positioned in the light-shielding light-receiving lens barrel 421, which is cylindrically formed of metal or resin, for example.

The light-receiving lens module 42 configured in this manner is aligned with the light-receiving detection module 45 so as to form a light-receiving axis Or. The light-receiving axis Or of the light-receiving lens module 42 is displaced in the Y-axis direction relative to the projection optical axis Op of the projection lens module 26. As a result, the reflected beam Br reflected from the reflective surface 33 of the scanning mirror 32, shifted in the Y-axis direction, is guided toward the light-receiving detection module 45 along the light-receiving axis Or on the XZ-plane by the optical action of the light-receiving lens module 42.

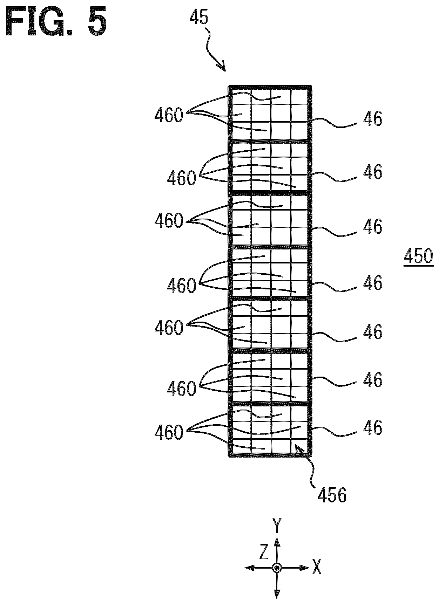

As shown in FIG. 5, the light-receiving detection module 45 is constructed by arranging a plurality of light-receiving pixels 46 in an array on a substrate 450. Each of the light-receiving pixels 46 is arranged along at least the Y-axis direction. Each light-receiving pixel 46 is further formed from, for example, a single photon avalanche diode (Single Photon Avalanche Diode) as light receiving elements 460 each.

As shown in FIGS. 1, 5, the light-receiving detection module 45 has a detection surface 456 formed on one side of the substrate 450. The detection surface 456 is configured by a collection of an incident surfaces of the light-receiving pixels 46 into a rectangular contour that is long in the Y-axis direction and short in the X-axis direction. Each light-receiving pixel 46 receives a linear reflected beam Br that has been incident on the detection surface 456 from the light-receiving lens module 42 along the light-receiving axis Or.

As shown in FIG. 1, the light-receiving detection module 45 has an output circuit 47. The output circuit 47 performs sampling processing at each control cycle according to the control signal from the control unit 51 in a detection frame for each scanning line corresponding to the rotation angle of the scanning mirror 32, synchronized with a projection cycle of the projected beam Bp by the light source module 22. The output circuit 47 generates a detection signal by synthesizing the response output from the light receiving element 460 of each light-receiving pixel 46 at each control cycle. The detection signal thus generated is output from the output circuit 47 to the control unit 51 by each scanning line.

The control unit 51 controls target detection in the detection area Ad in the external environment. The control unit 51 mainly includes at least one of a computer including a processor and a memory. The control unit 51 is connected to the light source module 22, the scanning motor 35, and the light-receiving detection module 45. The control unit 51 controls the light source module 22 to generate the projected beam Bp in each projection cycle. The control unit 51 also controls the scanning motor 35 to control scanning and reflection by the scanning mirror 32 synchronized with the projection cycle by the light source module 22. Furthermore, the control unit 51 generates detection data of object targets in the detection area Ad by processing the detection signals output from the light-receiving detection module 45 in accordance with the projection cycle by the light source module 22 and the scanning and the reflection by the scanning mirror 32.

Detailed Configuration

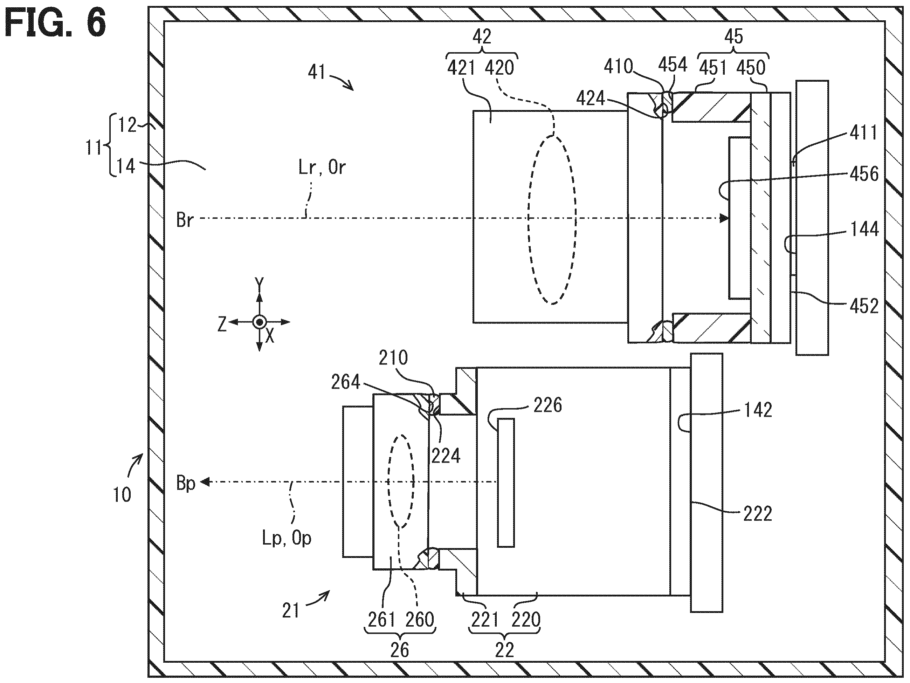

Next, the detailed configuration of the housing 11 will be described. The housing 11 further includes a sensor base 14 shown in FIG. 6.

The light-shielding sensor base 14 is mainly made of a base material such as resin or metal, and is formed in a shape of a partition that divides an inside of the main body 12 into two. The sensor base 14 is surrounded and held from the outer periphery by the main body 12, and is positioned with one surface facing an inner surface of the optical window 13. In such a positioning state, the sensor base 14 is assumed to be in the three-dimensional coordinate system defined above.

The sensor base 14 has a light-emitting base surface 142 for positioning the light-emitting unit 21. The light-emitting base surface 142 is formed on a lateral surface of a convex portion that protrudes in a block shape in the X-axis direction from one surface of the sensor base 14 facing the optical window 13. The light-emitting base surface 142 is defined as a plane extending along the XY-plane. That is, the light-emitting base surface 142 extends along the X-axis and the Y-axis.

The sensor base 14 has a light-receiving base surface 144 for positioning the light-receiving unit 41. The light-receiving base surface 144 is formed on the lateral surface of the convex portion that protrudes in a block shape in the X-axis direction from one surface of the sensor base 14 facing the optical window 13. The light-receiving base surface 144 is defined as a plane extending along the XY-plane. That is, the light-receiving base surface 144 extends along the X-axis and the Y-axis. The light-receiving base surface 144 may be constructed as a separate surface that is separate from the light-emitting base surface 142. The light-receiving base surface 144 may be constructed as a continuous surface that is continuous with the light-emitting base surface 142. It should be noted that FIG. 6 shows an example of the base surfaces 142, 144 being constructed as separate surfaces.

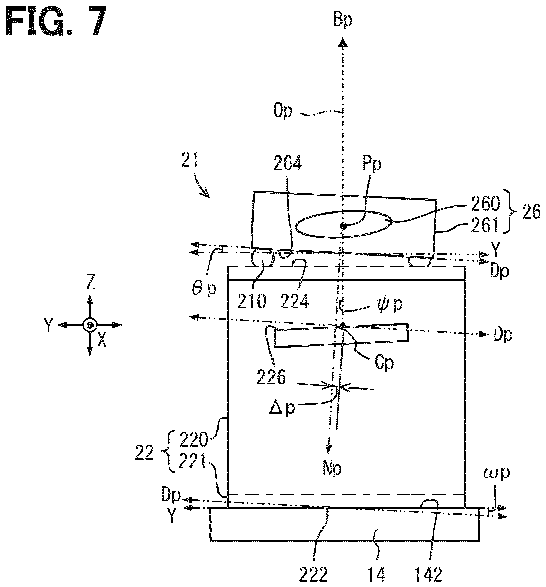

Next, the detailed configuration of the light-emitting unit 21 will be described. As shown in FIGS. 6, 7, in the light-emitting unit 21, the projection lens module 26 is bonded to the light source module 22 in the Z-axis direction.

More specifically, the projection lens barrel 261 in the projection lens module 26 forms a projection-adhesive surface 264 at an end face that faces the light source module 22 in the Z-axis direction. In the light source module 22, a projecting holder 221 that holds the substrate 220 on which the projection light sources 24 (see FIG. 2) are mounted forms a projection-adhesive surface 224 on an end face that faces the projection lens module 26 in the Z-axis direction. The light-shielding projecting holder 221 is formed in a cylindrical shape mainly made of a base material such as resin or metal, and holds the substrate 220.

A projection adhesive 210 is interposed between the projection-adhesive surface 264 of the projection lens barrel 261 and the projection-adhesive surface 224 of the projecting holder 221 continuously around the entire circumference of the projection optical axis Op. The projection adhesive 210 is an ultraviolet-heat combination adhesive, such as an epoxy resin, which can be cured by at least ultraviolet ray irradiation or heating. The modules 26, 22 are bonded to each other at their respective projection-adhesive surfaces 264, 224 via the hardened projection adhesive 210.

The projecting holder 221 has a projection-positioning surface 222 as a structure for positioning with respect to the sensor base 14. The projection-positioning surface 222 is positioned by the light-emitting base surface 142 along the Y and X axes. The projection-positioning surface 222 is directly positioned and supported on the sensor base 14 through surface contact with the light-emitting base surface 142, and is defined as a plane extending along the Y-axis and the X-axis (i.e., extending on the XY-plane).

The projecting holder 221 is screwed to locations on the sensor base 14 so as to adjust the projection optical axis Op on the XZ-plane perpendicular to the light-emitting base surface 142. As a result, the housing 11 including the sensor base 14 directly holds the light source module 22 and indirectly holds the projection lens module 26 via the light source module 22.

In the projection lens barrel 261 of the light-emitting unit 21, a projection adjustment direction Dp perpendicular to the X-axis is geometrically assumed along the projection-adhesive surface 264 as shown in FIG. 7. Therefore, the light-emitting unit 21 is configured such that an optical center Cp of the light-emitting surface 226 in the light source module 22 is offset in the projection adjustment direction Dp with respect to a principal point Pp of the projection lens 260 in the projection lens module 26. With this offset configuration, the light source module 22 and the projection lens module 26 jointly form the projection optical axis Op on the XZ-plane perpendicular to the light-emitting base surface 142 and the projection-positioning surface 222 along the Y-axis direction. In other words, the offset configuration constructed in the light-emitting unit 21 can be said to adjust the projection optical axis Op on the projection-reference plane Lp (see FIG. 6) which is perpendicular to the YZ-plane in the three-dimensional coordinate system, or in the first embodiment, on the XZ-plane.

A deviation amount $\Delta p$ indicates an amount by which the optical center Cp of the light-emitting surface 226 is deviated in the projection adjustment direction Dp relative to the principal point Pp of the projection lens module 26. The deviation amount $\Delta p$ should satisfy the following formulas 1 to 3, with a focal length of the projection lens module 26 as a coefficient value fp. Here, the principal point Pp is defined with respect to a single projection lens 260, or with respect to at least one representative projection lens 260 among the plurality. Furthermore, the coefficient value fp representing the focal length is defined as a single value for a single projection lens 260, or a composite value for multiple projection lenses 260 (i.e., a composite focal length).

[Math 1]

$$\Delta p = fp \cdot \tan \theta p \quad \cdots (1)$$

[Math 2]

$$\Delta p = fp \cdot \tan \psi p \quad \cdots (2)$$

[Math 3]

$$\Delta p = -fp \cdot \tan \omega p \quad \cdots (3)$$

Specifically, formula 1 represents the deviation amount $\Delta p$ that correlates with an inclination angle $\theta p$ of the projection-adhesive surface 264 relative to the light-emitting base surface 142 around the X-axis. On the other hand, formula 2 represents the deviation amount $\Delta p$ that correlates with a first angle $\psi p$ of the normal direction Np on the projection-adhesive surface 264 with respect to the projection optical axis Op around the X-axis. Furthermore, formula 3 represents the deviation amount $\Delta p$ that correlates with an attitude angle deviation (attitude angle) $\omega p$ of the projection-positioning surface 222 relative to the projection-adhesive surface 264 around the X-axis.

Here, the inclination angle $\theta p$, the fist angle $\psi p$, and the attitude angle deviation $\omega p$ are all defined as signed angles with a clockwise direction being positive and a counterclockwise direction being negative in the YZ-plane view of FIG. 7, and thus have a correlation that satisfies the following formula 4. Therefore, for positive angles $\theta p$, $\psi p$ and negative angle $\omega p$, the deviation amount $\Delta p$ takes a positive value which indicates a state in which the optical center Cp is deviated to a right from the principal point Pp in the projection adjustment direction Dp in the YZ-plane view of FIG. 7. On the other hand, for negative angles $\theta p$, $\psi p$ and positive angle $\omega p$, the deviation amount $\Delta p$ takes a negative value indicating a state in which the optical center Cp is deviated to a left from the principal point Pp in the projection adjustment direction Dp in the YZ-plane view. It should be noted that at least one of these definitions of positive and negative signs may be defined oppositely to that described above.

[Math 4]

$$\theta p = \psi p = -\omega p \quad \cdots (4)$$

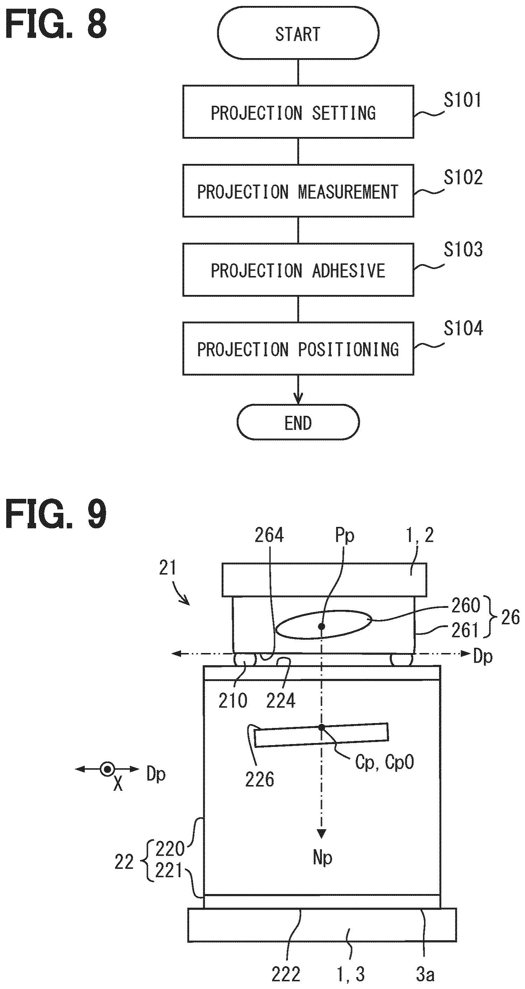

Among manufacturing methods for the optical sensor 10 according to the first embodiment, a method for manufacturing the light-emitting unit 21 will be described below with reference to the manufacturing flow shown in FIG. 8. In the manufacturing flow of FIG. 8, "S" denotes a "manufacturing process" for manufacturing the light-emitting unit 21.

In a projection setting process of S101, the projection lens barrel 261 that holds the projection lens 260 in the projection lens module 26 is fixed in position by a fixing jig 2 of a manufacturing device 1 shown in FIG. 9. At the same time, in the projection setting process, the projection-positioning surface 222 of the projecting holder 221 that holds the substrate 220 in the light source module 22 is attached to a movable base surface 3a of a movable stage 3 of the manufacturing device 1 shown in FIG. 9 so as to be movable integrally. Furthermore, in the projection setting process, the projection adhesive 210 in an uncured state, for example in a gel state, is sandwiched between the projection-adhesive surfaces 264, 224 of the modules 26, 22.

At this time, while the projection adhesive 210 is clamped, the optical center Cp of the light-emitting surface 226 of the light source module 22 is aligned with the principal point Pp of the projection lens module 26 by driving the movable stage 3 in the projection adjustment direction Dp perpendicular to the X-axis along the projection-adhesive surface 264. Therefore, the optical center Cp in the initial state in the projection setting process shown in FIG. 9 is set to an initial center Cp0 aligned with the principal point Pp in the normal direction Np of the projection-adhesive surface 264.

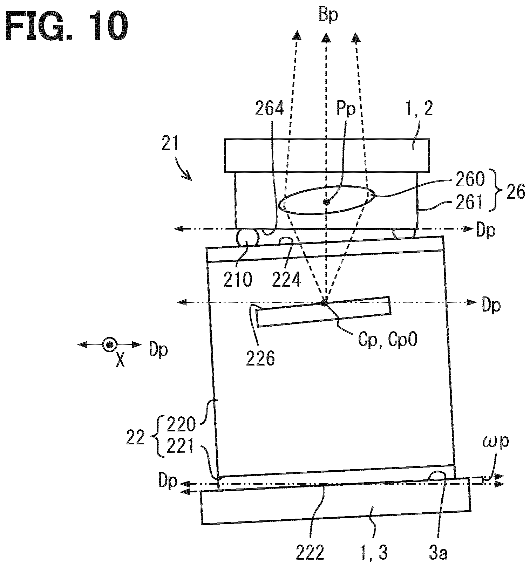

Next, in the projection measurement process of S102 shown in FIG. 8, the attitude angle deviation ωp of the projection-positioning surface 222 of the light source module 22 relative to the projection-adhesive surface 264 of the projection lens module 26 is measured around the X-axis in a focused state of the projected beam Bp shown in FIG. 10. In the projection measurement process, the focus state at a screen position is searched for by defocusing, which evaluates the degree of concentration of the projected beam Bp, such as an image size, on a screen at a set distance from the principal point Pp of the projection lens module 26. Here, the focus state may denote a state in which the line-shaped projected beam Bp is in focus overall in the longitudinal direction within a range of a circular error probable.

In the projection measurement process, a relative attitude of the light source module 22 with respect to the projection lens module 26 is fine-tuned by the movable stage 3 around the X-axis assumed on the initial center Cp0 along the projection-adhesive surface 264, making it possible to search for the focusing state that gives the optimal attitude. Therefore, in the projection measurement process, the attitude angle deviation ωp of the projection-positioning surface 222 relative to the projection-adhesive surface 264 is measured as a physical quantity representing the relative attitude around the X-axis of each of the modules 26, 22 in the searched focused state. At this time, the measured value of the attitude angle deviation ωp may be corrected based on an attitude angle error of the movable base surface 3a of the movable stage 3 around the X-axis.

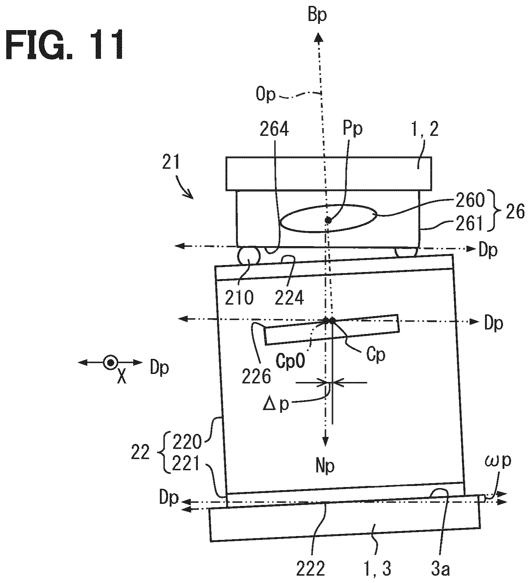

Next, in a projection adhesive process of S103 shown in FIG. 8, the optical center Cp of the light-emitting surface 226 of the light source module 22 is displaced from the initial center Cp0 in the projection adjustment direction Dp with respect to the principal point Pp of the projection lens module 26 by the deviation amount Δp that correlates with the measured value of the attitude angle deviation ωp by S102, as shown in FIG. 11. Furthermore, the projection adhesive process hardens the projection adhesive 210 sandwiched between the projection-adhesive surfaces 264, 224, thereby adhering the projection-adhesive surface 264 of the projection lens module 26 to the light source module 22 in such a displaced state via the projection adhesive 210. At this time, the projection adhesive 210 is hardened by irradiation with ultraviolet light at least from the outer circumferential side around the projection optical axis Op. The projection adhesive 210 may be cured by heating in addition to being cured by ultraviolet light.

Next, in a projection positioning process of S104 shown in FIG. 8, the projection-positioning surface 222 of the light source module 22, to which the projection lens module 26 was bonded in S103, and is fixed to the sensor base 14 by the light-emitting base surface 142 as shown in FIG. 7. At this time, the modules 26, 22 that have been integrated into the light-emitting unit 21 by the previous bonding can jointly form, on the XZ-plane perpendicular to the light-emitting base surface 142, the projection optical axis Op that is adjusted around the X-axis by a deviation configuration according to the deviation amount Δp in S103 that is responsive to the attitude angle deviation ωp measured in S102.

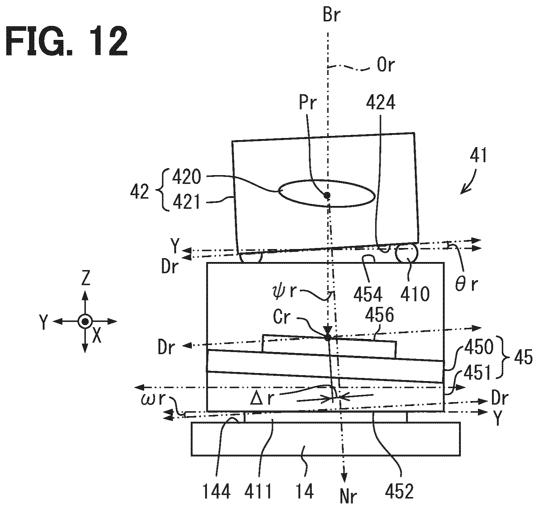

Next, the detailed configuration of the light-receiving unit 41 will be described. As shown in FIGS. 6, 12, in the light-receiving unit 41, the light-receiving lens module 42 is bonded to the light-receiving detection module 45 in the Z-axis direction.

More specifically, the light-receiving lens barrel 421 in the light-receiving lens module 42 forms the receiving-adhesive surface 424 by an end surface that faces the light-receiving detection module 45 in the Z-axis direction. In the light-receiving detection module 45, a light-receiving holder 451 that holds a substrate 450 on which the light-receiving pixels 46 (see FIG. 5) are arranged forms the receiving-adhesive surface 454 on its end surface that faces the light-receiving lens module 42 in the Z-axis direction. The light-shielding light-receiving holder 451 is formed in a cylindrical shape mainly made of a base material such as resin or metal, and holds the substrate 450.

A light-receiving adhesive 410 is interposed between the receiving-adhesive surface 424 of the light-receiving lens barrel 421 and the receiving-adhesive surface 454 of the light-receiving holder 451 continuously around the entire circumference of the light-receiving axis Or. The light-receiving adhesive 410 is also an ultraviolet-heat combination adhesive, such as an epoxy resin, which can be cured by at least the ultraviolet ray irradiation or the heat. The modules 42, 45 are bonded to each other at their respective adhesive surfaces 424, 454 via the hardened light-receiving adhesive 410.

The light-receiving holder 451 has a receiving-positioning surface 452 as a structure for positioning with respect to the sensor base 14. The receiving-positioning surface 452 is positioned by the light-receiving base surface 144 along at least the Y-axis of the Y-axis and the X-axis. The receiving-positioning surface 452 is positioned and supported on the sensor base 14 via shims 411 between the light-receiving base surface 144 and the receiving-positioning surface 452, so that the receiving-positioning surface 452 is defined as a plane extending along at least the Y-axis of the Y-axis and X-axis. Here, the shims 411 are formed of, for example, metal or resin, and have a plate shape of individual thickness aligned in the X-axis direction. In FIGS. 6, 12 representatively illustrate only one of the shims 411 located at the foremost position when viewed in the YZ-plane (i.e., when viewed in the X-axis direction).

The light-receiving holder 451 is screwed to locations on the sensor base 14 so as to adjust the light-receiving axis Or on the XZ-plane perpendicular to the light-receiving base surface 144. As a result, the housing 11 including the sensor base 14 directly holds the light-receiving detection module 45, and also indirectly holds the light-receiving lens module 42 via the light-receiving detection module 45.

In the light-receiving lens barrel 421 of the light-receiving unit 41, a light-receiving adjustment direction Dr perpendicular to the X-axis is geometrically assumed along the receiving-adhesive surface 424 as shown in FIG. 12. Therefore, in the light-receiving unit 41, the optical center Cr of the detection surface 456 in the light-receiving detection module 45 is configured to be shifted in the light-receiving adjustment direction Dr with respect to the principal point Pr of the light-receiving lens 420 in the light-receiving lens module 42. With this offset configuration, the light-receiving detection module 45 and the light-receiving lens module 42 jointly form a light-receiving axis Or on the XZ-plane perpendicular to the light-receiving base surface 144 and the receiving-positioning surface 452 along the Y-axis direction. In other words, the offset configuration constructed in the light-receiving unit 41 can be said to adjust the light-receiving axis Or on the XZ-plane in the first embodiment, as a light-receiving reference plane Lr (see FIG. 6) which is perpendicular to the YZ-plane in the three-dimensional coordinate system.

A deviation amount Δr by which the optical center Cr of the detection surface 456 deviates from the principal point Pr of the light-receiving lens module 42 in the light-receiving adjustment direction Dr should satisfy the following formulas 5 to 7, with a focal length of the light-receiving lens module 42 being a coefficient value fr. Here, the principal point Pr is defined with respect to a single light-receiving lens 420, or with respect to at least one representative light-receiving lens 420 among the light-receiving lenses 420. Furthermore, the coefficient value fr representing the focal length is defined as a single value for a single light-receiving lens 420, or a composite value (i.e., a composite focal length) for multiple light-receiving lenses 420.

[Math 5]

$$\Delta r = fr \cdot \tan \theta r \quad \cdots (5)$$

[Math 6]

$$\Delta r = fr \cdot \tan \psi r \quad \cdots (6)$$

[Math 7]

$$\Delta r = -fr \cdot \tan \omega r \quad \cdots (7)$$

More specifically, formula 5 represents the deviation amount Δr that correlates with an inclination angle θr of the receiving-adhesive surface 424 relative to the light-receiving base surface 144 around the X-axis. On the other hand, formula 6 represents the deviation amount Δr that correlates with a first angle ψr of a normal direction Nr on the receiving-adhesive surface 424 with respect to the light-receiving axis Or around the X-axis. Furthermore, formula 7 represents the deviation amount Δr that correlates with an attitude angle deviation ωr of the receiving-positioning surface 452 with respect to the receiving-adhesive surface 424 around the X-axis.

Here, the inclination angle θr, the first angle ψr, and the attitude angle deviation ωr are all defined as signed angles with a clockwise direction being positive and a counterclockwise direction being negative in the YZ-plane view of FIG. 12, and thus have a correlation that satisfies the following formula 8. Therefore, for negative angles θr, ψr and a positive angle ωr, the deviation amount Δr takes a negative value, which indicates a state in which the optical center Cr is deviated to the left from the principal point Pr in the light-receiving adjustment direction Dr in the YZ-plane view of FIG. 12. On the other hand, for positive angles θr, ψr and a negative angle ωr, the deviation amount Δr takes a positive value indicating a state in which the optical center Cr is deviated to the right from the principal point Pr in the light-receiving adjustment direction Dr in the YZ-plane view. It should be noted that at least one of these definitions of positive and negative signs may be defined oppositely to that described above.

[Math 8]

$$\theta r = \psi r = -\omega r \quad \cdots (8)$$

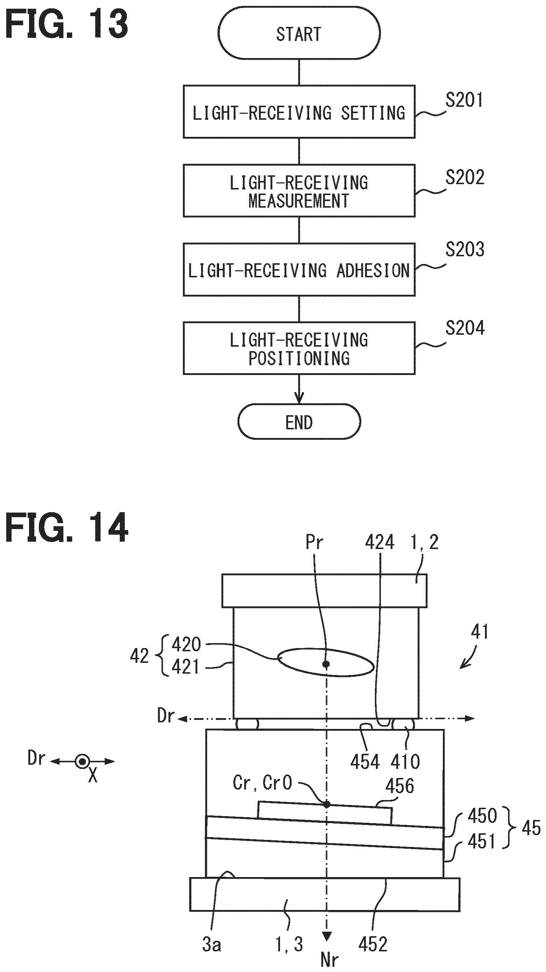

Among manufacturing methods for the optical sensor 10 according to the first embodiment, a method for manufacturing the light-receiving unit 41 will be described below with reference to the manufacturing flow shown in FIG. 13. In the manufacturing flow of FIG. 13, "S" denotes a "manufacturing process" for manufacturing the light-receiving unit 41.

In a light-receiving setting process of S201, the light-receiving lens barrel 421 that holds the light-receiving lens 420 in the light-receiving lens module 42 is positioned and fixed by the fixing jig 2 of the manufacturing device 1 shown in FIG. 14. At the same time, in the light-receiving setting process, the receiving-positioning surface 452 of the light-receiving holder 451 that holds the substrate 450 in the light-receiving detection module 45 is attached to the movable base surface 3a of the movable stage 3 of the manufacturing device 1 shown in FIG. 14 so as to be movable integrally. Furthermore, in the light-receiving setting process, a light-receiving adhesive 410 in an uncured state, such as a gel state, is sandwiched between the receiving-adhesive surfaces 424, 454 of the modules 42, 45.

At this time, while the light-receiving adhesive 410 is clamped, the optical center Cr of the detection surface 456 of the light-receiving detection module 45 is aligned with the principal point Pr of the light-receiving lens module 42 by driving the movable stage 3 in the light-receiving adjustment direction Dr perpendicular to the X-axis along the receiving-adhesive surface 424. Therefore, the optical center Cr in the initial state in the light-receiving setting process as shown in FIG. 14 is set to the initial center Cr0 aligned with the principal point Pr in the normal direction Nr of the receiving-adhesive surface 424.

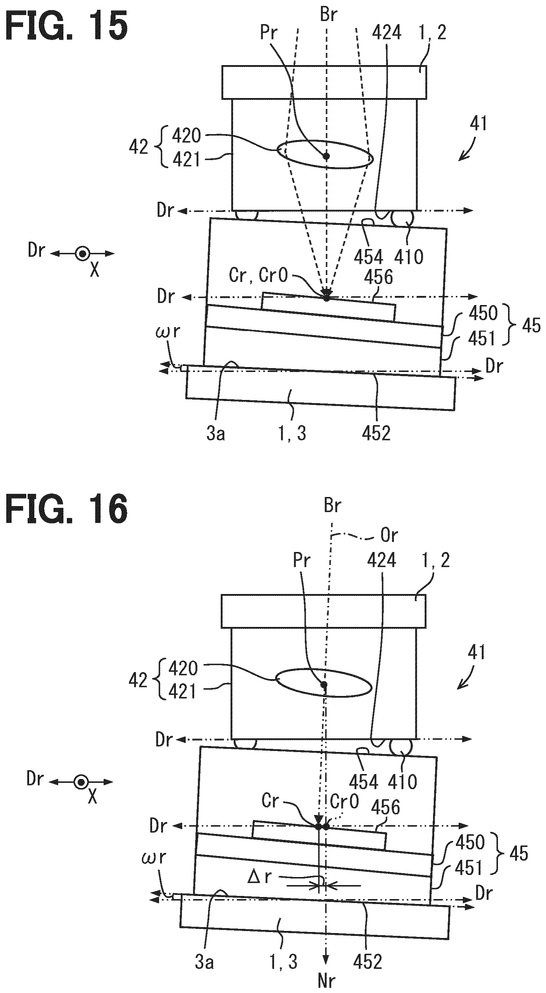

Next, the light-receiving measurement process S202 shown in FIG. 13 measures an attitude angle deviation ωr of the receiving-positioning surface 452 of the light-receiving detection module 45 relative to the receiving-adhesive surface 424 of the light-receiving lens module 42 around the X-axis in the focused state of the reflected beam Br shown in FIG. 15. To this end, in the light-receiving measurement process, the focus state at the position of the detection surface 456 of the light-receiving detection module 45 is searched for by defocusing, which evaluates the degree of concentration of the reflected beam Br, such as an image size or energy, at the detection surface 456. Here, the focus state may mean a state in which the linear reflected beam Br is in focus overall in the longitudinal direction within the range of the permissible circle of confusion.

In the light-receiving measurement process, a relative attitude of the light-receiving detection module 45 with respect to the light-receiving lens module 42 is fine-tuned by the movable stage 3 around the X-axis assumed on the initial center Cr0 along the receiving-adhesive surface 424, making it possible to search for the focusing state that gives the optimal attitude. In the light-receiving measurement process, therefore, the attitude angle deviation ωr of the receiving-positioning surface 452 relative to the receiving-adhesive surface 424 is measured as a physical quantity representing the relative attitude around the X-axis of each module 45, 42 in the searched focused state. At this time, the measured value of the attitude angle deviation ωr may be corrected based on the attitude angle error of the movable base surface 3a of the movable stage 3 around the X-axis.

Next, in the light-receiving adhesion process of S203 shown in FIG. 13, the optical center Cr of the detection surface 456 of the light-receiving detection module 45 is shifted from the initial center Cr0 to the light-receiving adjustment direction Dr along the receiving-adhesive surface 424 with respect to the principal point Pr of the light-receiving lens module 42 by the deviation amount Δr that correlates with the measured value of the attitude angle deviation ωr by S202, as shown in FIG. 16. Therefore, the light-receiving adhesion process further hardens the light-receiving adhesive 410 sandwiched between the receiving-adhesive surfaces 424, 454, thereby adhering the receiving-adhesive surface 424 of the light-receiving lens module 42 to the light-receiving detection module 45 in such a displaced state via the light-receiving adhesive 410. At this time, the light-receiving adhesive 410 is hardened by irradiation with ultraviolet light at least from the outer periphery side around the light-receiving axis Or. The light-receiving adhesive 410 may be cured by heating in addition to being cured by ultraviolet light.

Next, the light-receiving positioning process of S204 shown in FIG. 13 is to position the receiving-positioning surface 452 in the light-receiving detection module 45 to which the light-receiving lens module 42 was glued by S203, and fix it to the sensor base 14 by the light-receiving base surface 144 as shown in FIG. 12. At this time, the modules 42, 45 that have been integrated into the light-receiving unit 41 by the previous bonding can jointly form, on the XZ-plane perpendicular to the light-receiving base surface 144, the light-receiving axis Or that is adjusted around the X-axis by a deviation configuration according to the deviation amount Δr in S203 that corresponds to the attitude angle deviation ωr measured in S202.

Here, in the light-receiving positioning process, the orientation of the light-receiving axis Or in the light-receiving unit 41 around the Y-axis and the Z-axis is matched to the orientation of the projection optical axis Op in the previously manufactured light-emitting unit 21 around the Y-axis and the Z-axis. In particular, multiple shims 411 of individual thicknesses corresponding to the posture of the light-receiving axis Or around the Y-axis are sandwiched between the receiving-positioning surface 452 of the light-receiving detection module 45 and the light-receiving base surface 144, as shown in FIG. 12.

Actions and Effects

The actions and effects of the first embodiment described above are described below.

In the first embodiment, the projection-positioning surface 222 of the light source module 22 bonded to the projection-adhesive surface 264 of the projection lens module 26 is positioned along the Y-axis by the light-emitting base surface 142 of the sensor base 14. Therefore, the optical center Cp of the light-emitting surface 226 in the light source module 22 is shifted along the projection-adhesive surface 264 in the projection adjustment direction Dp perpendicular to the X-axis relative to the principal point Pp of the projection lens module 26, and the projection optical axis Op is adjusted on the XZ-plane perpendicular to the light-emitting base surface 142. According to such a displacement configuration, it is possible to adjust the projection optical axis Op in accordance with the XZ-plane while absorbing manufacturing tolerances including tilt within each module 26, 22 and between each module 26, 22. Therefore, the adjustment accuracy of the projection optical axis Op can be ensured.

According to the first embodiment, the deviation amount Δp of the optical center Cp of the light-emitting surface 226 in the projection adjustment direction Dp relative to the principal point Pp of the projection lens module 26 correlates with the inclination angle θp of the projection-adhesive surface 264 relative to the light-emitting base surface 142 around the X-axis. In other words, this means that the inclination angle θp of the projection-adhesive surface 264 relative to the light-emitting base surface 142 can be an appropriate angle corresponding to the deviation amount Δp for forming the projection optical axis Op aligned with the XZ-plane. Therefore, the projection optical axis Op can be adjusted with high precision.

According to the first embodiment, the deviation amount Δp of the optical center Cp of the light-emitting surface 226 in the projection adjustment direction Dp relative to the principal point Pp of the projection lens module 26 correlates with the angle ψp of the normal direction Np of the projection-adhesive surface 264 relative to the projection optical axis Op around the X-axis. In other words, the angle ψp of the normal direction Np on the projection-adhesive surface 264 relative to the projection optical axis Op can be an appropriate angle corresponding to the deviation amount Δp for forming the projection optical axis Op aligned with the XZ-plane. Therefore, the projection optical axis Op can be adjusted with high precision.

According to the first embodiment, the deviation amount Δp of the optical center Cp of the light-emitting surface 226 in the projection adjustment direction Dp relative to the principal point Pp of the projection lens module 26 correlates with the attitude angle deviation ωp of the projection-positioning surface 222 relative to the projection-adhesive surface 264 around the X-axis. In other words, this means that the attitude angle deviation ωp of the projection-positioning surface 222 relative to the projection-adhesive surface 264 can be an appropriate angle corresponding to the deviation amount Δp for forming the light-projection optical axis Op aligned with the XZ-plane. Therefore, the projection optical axis Op can be adjusted with high precision.

In the manufacturing method of the first embodiment, in the light source module 22 to which the projection-adhesive surface 264 of the projection lens module 26 is adhered, the projection-positioning surface 222 is positioned by the light-emitting base surface 142 and fixed to the sensor base 14. Therefore, the modules 26, 22 are bonded to each other before being fixed to the sensor base 14, in a state in which the optical center Cp of the light-emitting surface 226 is displaced in the projection adjustment direction Dp relative to the principal point Pp of the light-projection lens module 26 by the deviation amount Δp that correlates to a measured value that measures the attitude angle deviation ωp around the X-axis of the projection-positioning surface 222 relative to the projection-adhesive surface 264. In other words, this means that the attitude angle deviation ωp of the projection-positioning surface 222 relative to the projection-adhesive surface 264 can be an appropriate angle corresponding to the deviation amount Δp for forming the light-projection optical axis Op aligned with the XZ-plane. Therefore, the projection optical axis Op can be adjusted with high precision.

In the first embodiment, the receiving-positioning surface 452 of the light-receiving detection module 45 adhered to the receiving-adhesive surface 424 of the light-receiving lens module 42 is positioned along the Y-axis by the light-receiving base surface 144 of the sensor base 14. Therefore, the optical center Cr of the detection surface 456 in the light-receiving detection module 45 is shifted along the receiving-adhesive surface 424 in the light-receiving adjustment direction Dr perpendicular to the X-axis relative to the principal point Pr of the light-receiving lens module 42, and the light-receiving axis Or is adjusted on the XZ-plane perpendicular to the light-receiving base surface 144. According to such a displacement configuration, it is possible to adjust the light-receiving axis Or to match the XZ-plane while absorbing manufacturing tolerances including tilt within each module 42, 45 and between each module 42, 45. Therefore, the adjustment accuracy of the light-receiving axis Or can be ensured.

According to the first embodiment, the deviation amount $\Delta r$ of the optical center Cr of the detection surface 456 in the light-receiving adjustment direction Dr relative to the principal point Pr of the light-receiving lens module 42 correlates with the inclination angle $\theta r$ of the receiving-adhesive surface 424 relative to the light-receiving base surface 144 around the X-axis. In other words, the inclination angle $\theta r$ of the receiving-adhesive surface 424 relative to the light-receiving base surface 144 can be an appropriate angle corresponding to the deviation amount $\Delta r$ for forming the light-receiving axis Or aligned with the XZ-plane. Therefore, the light-receiving axis Or can be adjusted with high precision.

According to the first embodiment, the deviation amount $\Delta r$ by which the optical center Cr of the detection surface 456 deviates in the light-receiving adjustment direction Dr relative to the principal point Pr of the light-receiving lens module 42 correlates with the angle $\psi r$ formed by the normal direction Nr of the receiving-adhesive surface 424 relative to the light-receiving axis Or around the X-axis. In other words, the first angle $\psi r$ of the normal direction Nr on the receiving-adhesive surface 424 with respect to the light-receiving axis Or can be an appropriate angle corresponding to the deviation amount $\Delta r$ for forming the light-receiving axis Or aligned with the XZ-plane. Therefore, the light-receiving axis Or can be adjusted with high precision.

According to the first embodiment, the deviation amount $\Delta r$ of the optical center Cr of the detection surface 456 in the light-receiving adjustment direction Dr relative to the principal point Pr of the light-receiving lens module 42 correlates with the attitude angle deviation $\omega r$ of the receiving-positioning surface 452 relative to the receiving-adhesive surface 424 around the X-axis. In other words, this means that the attitude angle deviation $\omega r$ of the receiving-positioning surface 452 relative to the receiving-adhesive surface 424 can be an appropriate angle corresponding to the deviation amount $\Delta r$ for forming the light-receiving axis Or aligned with the XZ-plane. Therefore, the light-receiving axis Or can be adjusted with high precision.

Furthermore, in the manufacturing method of the first embodiment, in the light-receiving detection module 45 to which the receiving-adhesive surface 424 of the light-receiving lens module 42 is adhered, the receiving-positioning surface 452 is positioned by the light-receiving base surface 144 and fixed to the sensor base 14. Therefore, the modules 42, 45 are adhered to each other before being fixed to the sensor base 14, with the optical center Cr of the detection surface 456 displaced in the light-receiving adjustment direction Dr relative to the principal point Pr of the light-receiving lens module 42 by that deviation amount $\Delta r$ that correlates with the measured value measuring the attitude angle deviation $\omega r$ around the X-axis of the receiving-positioning surface 452 relative to the receiving-adhesive surface 424. In other words, this means that the attitude angle deviation $\omega r$ of the receiving-positioning surface 452 relative to the receiving-adhesive surface 424 can be an appropriate angle corresponding to the deviation amount $\Delta r$ for forming the light-receiving axis Or aligned with the XZ-plane. Therefore, the light-receiving axis Or can be adjusted with high precision.

Second Embodiment

A second embodiment is a modification to the first embodiment.

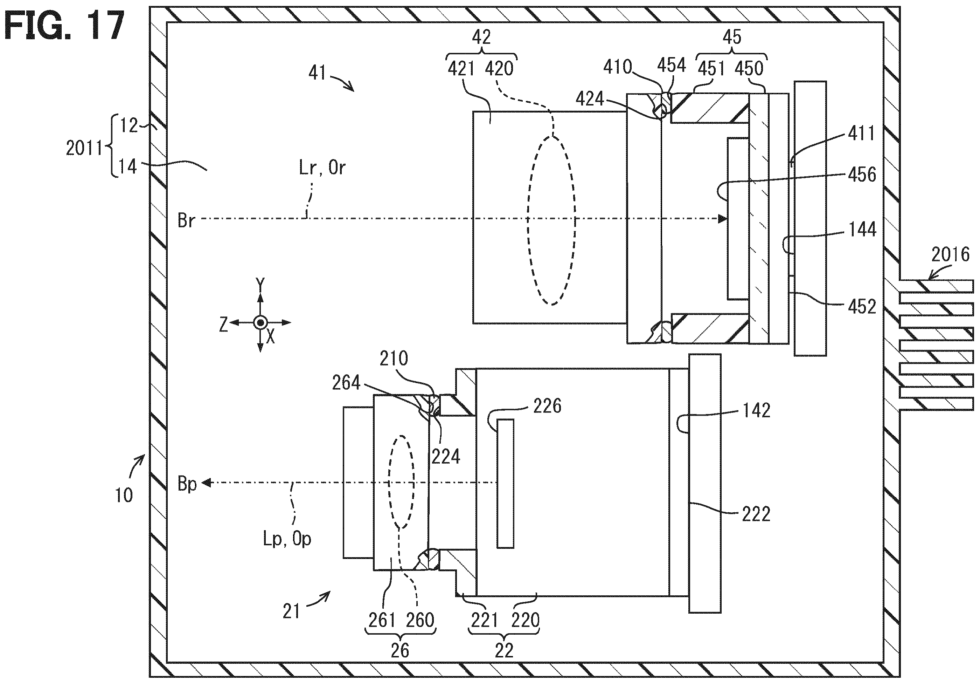

As shown in FIG. 17, a housing 2011 of a second embodiment has a heat dissipation part 2016 for dissipating heat conducted from the sensor base 14 therein to an external environment. The heat dissipation part 2016 is composed of heat dissipation fins that protrude in a flat plate shape toward the outside from the main body 12 of the housing 2011.

According to the second embodiment, the heat dissipation part 2016 of the housing 2011 including the sensor base 14 radiates heat conducted from the sensor base 14 holding the projection lens module 26 via the light source module 22 to the outside. As a result, the heat of the light source module 22 can be efficiently radiated, and deviation of the projection optical axis Op caused by thermal deformation of the projection lens module 26 can be reduced. Moreover, by holding the relatively projection lens module 26 via the relatively heavy light source module 22, shift of the projection optical axis Op caused by the relative posture change according to the load balance of those modules 22, 26 can also be reduced. Therefore, the adjustment accuracy of the projection optical axis Op can be continuously ensured.

Similarly, according to the second embodiment, the heat dissipation part 2016 of the housing 2011 radiates heat conducted from the sensor base 14 that holds the light-receiving lens module 42 via the light-receiving detection module 45 to the external environment. As a result, the heat of the light-receiving detection module 45 can be efficiently radiated, and the deviation of the light-receiving axis Or caused by thermal deformation of the light-receiving lens module 42 can be reduced. Furthermore, by holding the relatively light-receiving lens module 42 via the relatively heavy light-receiving detection module 45, deviation of the light-receiving axis Or caused by changes in the relative posture according to the load balance of the modules 45, 42 can also be reduced. Therefore, the adjustment accuracy of the light-receiving axis Or can be continuously ensured.

Third Embodiment

A third embodiment is a modification to the first embodiment.

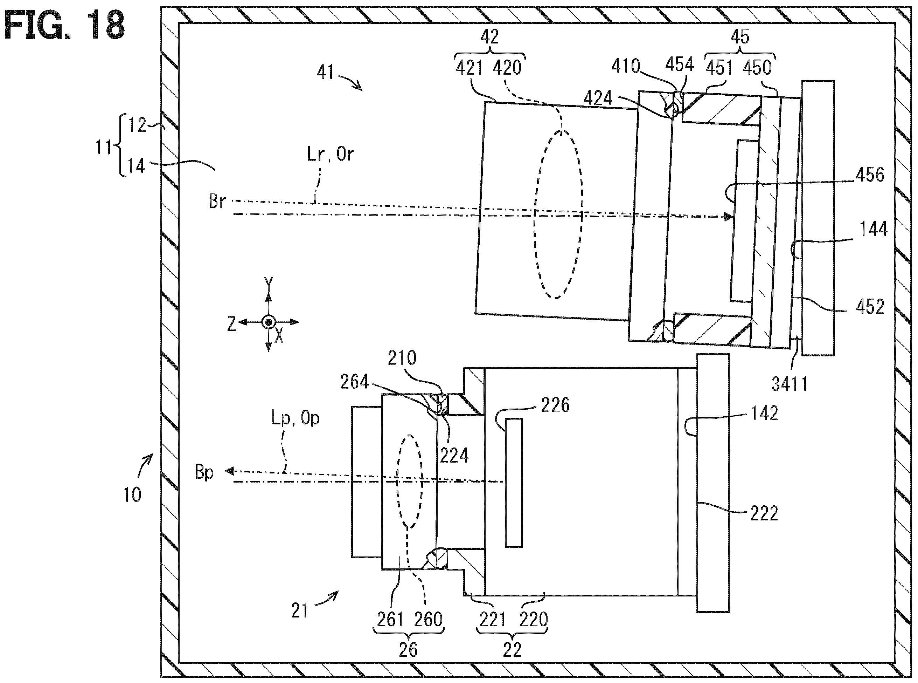

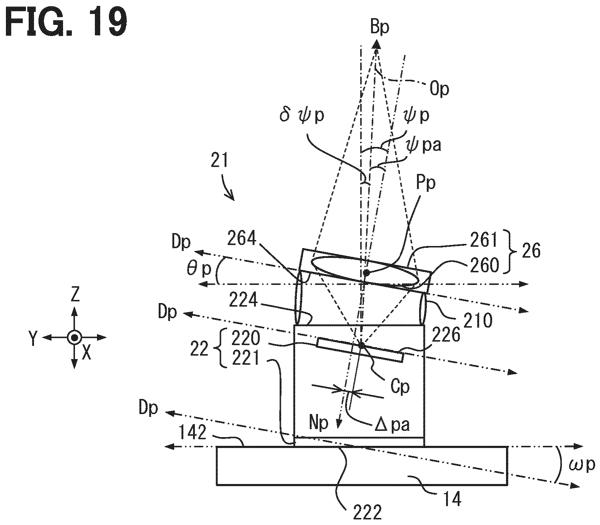

As shown in FIGS. 18 and 19, a projection optical axis Op in a third embodiment is adjusted on the projection-reference plane Lp that is inclined with respect to the XZ-plane in accordance with a projection error angle $\delta\psi p$ generated in the light-emitting unit 21 in the three-dimensional coordinate system. Such a projection error angle $\delta\psi p$ is assumed as a manufacturing tolerance caused by curing shrinkage of the projection adhesive 210. Therefore, a deviation configuration in the light-receiving unit 41 of the third embodiment in which the projection error angle $\delta\psi p$ occurs on the projection optical axis Op may satisfy the following formulas 9 to 12 instead of formulas 1 to 4 of the first embodiment.

[Math 9]

$$\Delta pa = fp \cdot \tan(\theta p - \delta\psi p) \quad \cdots (9)$$

[Math 10]

$$\Delta pa = fp \cdot \tan\psi pa = fp \cdot \tan(\psi p - \delta\psi p) \quad \cdots (10)$$

[Math 11]

$$\Delta pa = -fp \cdot \tan(\omega p + \delta\psi p) \quad \cdots (11)$$

[Math 12]

$$\theta p = \psi p = \psi pa + \delta\psi p = -\omega p \quad \cdots (12)$$

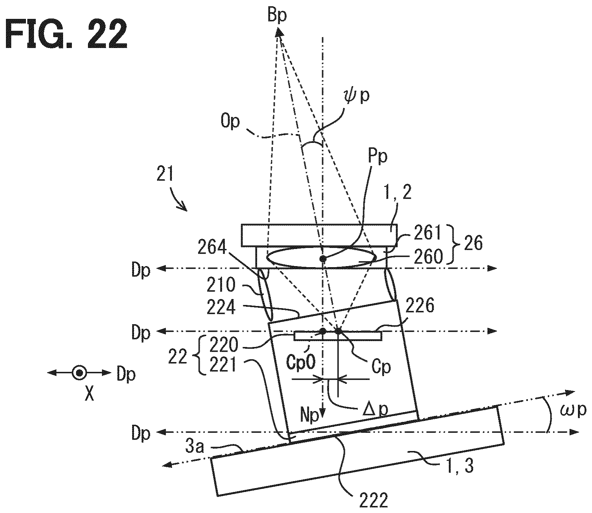

Here, "$\Delta pa$" in formulas 9 to 11 means a deviation amount $\Delta pa$ after the curing shrinkage relative to the deviation amount $\Delta p$ before the curing shrinkage in accordance with the first embodiment (see FIG. 22 described below) when the curing shrinkage of the projection adhesive 210 is assumed. In addition, "$\Delta\psi pa$" in formulas 9 to 11 means an angle $\psi pa$ after the curing shrinkage, relative to the angle $\psi p$ of the normal direction Np with respect to the projection optical axis Op before the curing shrinkage in accordance with the first embodiment, when the curing shrinkage of the projection adhesive 210 is assumed. In the following description, the attitude angle deviation $\omega p$ constituting the formula 12 will be specifically referred to as the projection-attitude angle deviation $\omega p$.

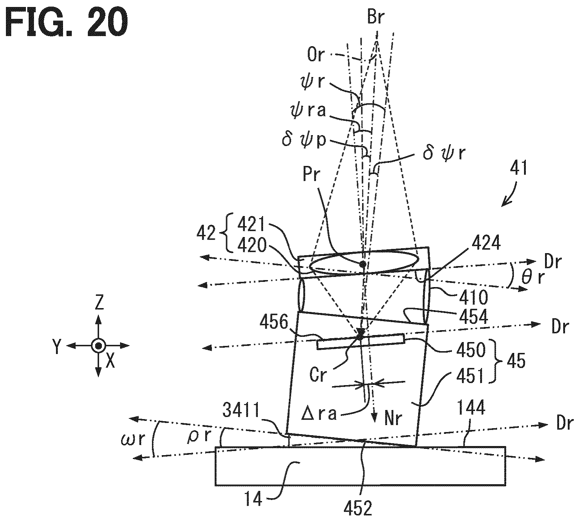

As shown in FIGS. 18, 20, the light-receiving axis Or in the third embodiment is adjusted on the light-receiving reference plane Lr which is inclined with respect to the XZ-plane in accordance with the correlation between an light-receiving error angle $\delta\psi r$ generated in the light-receiving unit 41 in the three-dimensional coordinate system and the above-mentioned projection error angle $\delta\psi p$. Such a light-receiving error angle $\delta\psi r$ is assumed as a manufacturing tolerance caused by the curing shrinkage of the light-receiving adhesive 410. Therefore, the deviation configuration in the light-receiving unit 41 of the third embodiment in which the light-receiving error angle $\delta\psi r$ occurs on the light-receiving axis Or may satisfy the following formulas 13 to 16 instead of formulas 5 to 8 of the first embodiment.

[Math 13]

$$\Delta ra = fr \cdot \tan(\theta r - \delta\psi r) \quad \cdots (13)$$

[Math 14]

$$\Delta ra = fr \cdot \tan\psi ra = fr \cdot \tan(\psi r - \delta\psi r) \quad \cdots (14)$$

[Math 15]

$$\Delta ra = -fr \cdot \tan(\omega r + \delta\psi r) \quad \cdots (15)$$

[Math 16]

$$\theta r = \psi r = \psi ra + \delta\psi r = -\omega r \quad \cdots (16)$$

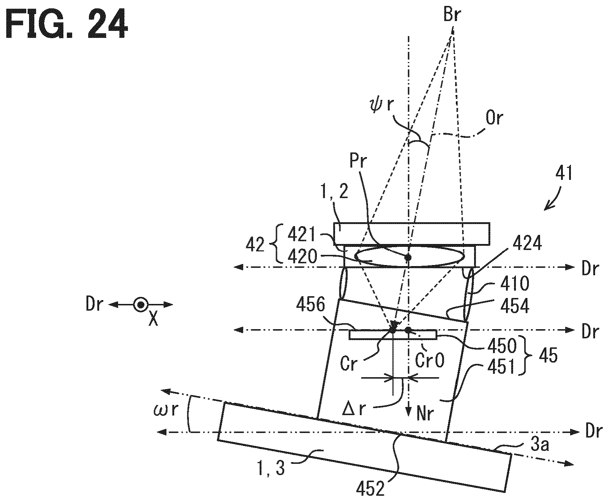

Here, "$\Delta ra$" in formulas 13 to 15 means a deviation amount $\Delta ra$ after the curing shrinkage relative to the deviation amount Δr before the curing shrinkage in accordance with the first embodiment (see FIG. 24 described below) when the curing shrinkage of the light-receiving adhesive 410 is assumed. In addition, "$\Delta\psi$ra" in formulas 13 to 15 means a first angle $\psi$ra after the curing shrinkage, relative to the first angle $\psi$r of the normal direction Nr with respect to the light-receiving axis Or before the curing shrinkage in accordance with the first embodiment, when the curing shrinkage of the light-receiving adhesive 410 is assumed. In the following description, the attitude angle deviation $\omega$r constituting formula 15 will be referred to as the light-receiving attitude angle deviation (receiving-attitude angle) $\omega$r in particular.

As shown in FIGS. 18 to 20, in the third embodiment, adjustment of the projection optical axis Op is realized by a direct positioning structure constructed at the projection positioning location between the projection-positioning surface 222 and the light-emitting base surface 142 under a displacement configuration that satisfies formulas 9 to 12. On the other hand, in the third embodiment, the adjustment of the light-receiving axis Or is realized by an indirect positioning structure in which a light-receiving positioning shim 3411 is interposed at the light-receiving positioning location between the receiving-positioning surface 452 and the light-receiving base surface 144 under a displacement configuration that satisfies formulas 13 to 16. The light-receiving positioning shim 3411 providing this indirect positioning structure forms a wedge angle $\rho$r between the receiving-positioning surface 452 and the light-receiving base surface 144 according to the correlation between the projection error angle $\delta\psi$p and the light-receiving error angle $\delta\psi$r in the three-dimensional coordinate system. By this composite positioning structure, the projection optical axis Op and the light-receiving axis Or are adjusted to run in substantially the same direction along the projection-reference plane Lp and the light-receiving reference plane Lr, which are substantially parallel to each other.

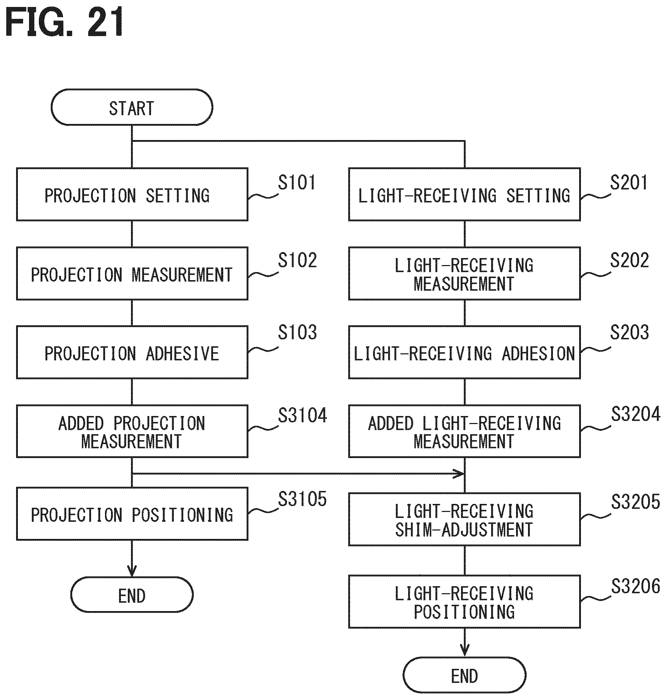

As shown in FIG. 21, in the manufacturing method of the optical sensor 10 according to the third embodiment, a light projection sequence for manufacturing the light-emitting unit 21 and a light receiving sequence for manufacturing the light-receiving unit 41 are executed in association with each other. In the manufacturing flow of FIG. 21, "S" refers to a "manufacturing step" of the light projection sequence and a "manufacturing step" of the light receiving sequence.

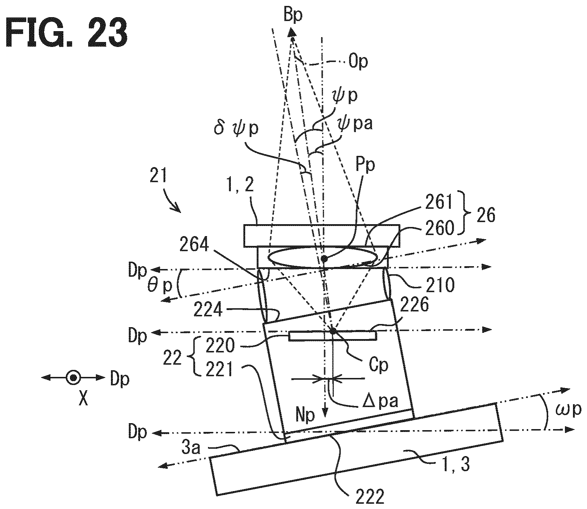

In the light projection sequence, steps S101 to S103 are executed in the same manner as in the first embodiment. Next, a projection measurement process of S3104 added to the light projection sequence measures the projection error angle $\delta\psi$p that has occurred, as shown in FIG. 23, from the measurement state in S102 shown in FIG. 22 to the projection optical axis Op of the projection lens module 26 that has been adhered to the light source module 22 by the hardening of the projection adhesive 210. Therefore, in an additional projection measurement process, the focus state of the projected beam Bp is searched in the three dimensions on a screen at a set distance from the principal point Pp of the projection lens module 26 in accordance with S102 of the first embodiment, and the projection error angle $\delta\psi$p of the projection optical axis Op corresponding to the deviation of the focus state is measured in the three dimensions.

At this time, the measured value of the projection error angle $\delta\psi$p may be corrected based on the three-dimensional attitude angle error of the movable base surface 3a of the movable stage 3. However, when the attitude of the movable base surface 3a in S102 is reproduced in S3104 by the movable stage 3 different from that in S102, correction may be made based on the attitude angle error of the movable base surface 3a in each of S102 and S3104.

Next, in the light projection sequence shown in FIG. 21, the projection positioning process of S3105 is similar to S104 in the first embodiment. That is, the projection positioning process of S3105 is to position the projection-positioning surface 222 of the light source module 22 to which the projection lens module 26 has been bonded according to S103, directly with the light-emitting base surface 142 as shown in FIG. 19, and fix it to the sensor base 14. However, at this time, the integrated modules 26, 22 are able to jointly form the projection optical axis Op on the projection-reference plane Lp under a deviation configuration in which the deviation amount Δpa satisfies the above-mentioned formulas 9 to 12 in accordance with the projection-attitude angle deviation $\omega$p measured in S102 and the projection error angle $\delta\psi$p measured in S3104.

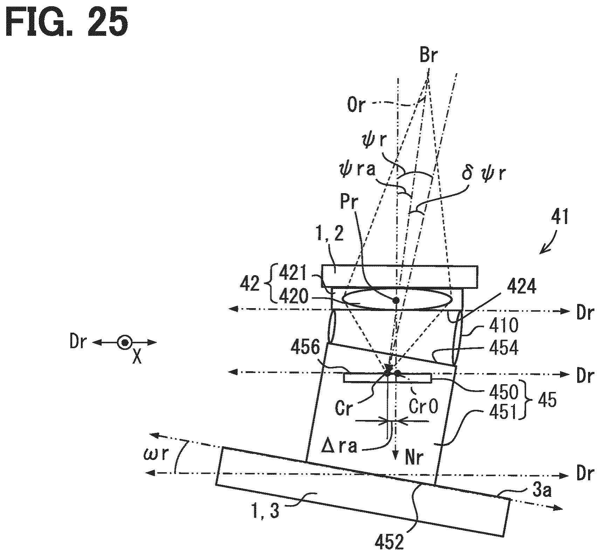

On the other hand, steps S201 to S203 in the light receiving sequence are executed in the same manner as in the first embodiment. Next, a light-receiving measurement process of S3204 added to the light receiving sequence measures the light-receiving error angle $\delta\psi$r that has occurred as shown in FIG. 25 from the measurement state in S202 shown in FIG. 24 to the light-receiving axis Or of the light-receiving lens module 42 that has been adhered to the light-receiving detection module 45 by the hardening of the light-receiving adhesive 410. Therefore, in the additional light-receiving measurement process, the focusing state of the reflected beam Br on the detection surface 456 of the light-receiving detection module 45 is searched in three dimensions in accordance with S202 of the first embodiment, and the light-receiving error angle $\delta\psi$r of the light-receiving axis Or corresponding to the deviation of the focusing state is measured in three dimensions.

At this time, the measured value of the light-receiving error angle $\delta\psi$r may be corrected based on the three-dimensional attitude angle error of the movable base surface 3a of the movable stage 3. However, when the attitude of the movable base surface 3a in S202 is reproduced in S3204 by the movable stage 3 different from that in S202, correction may be made based on the attitude angle error of the movable base surface 3a in each of S202 and S3204.

Next, in the light receiving sequence shown in FIG. 21, a light-receiving shim-adjustment process of S3205 adjusts the wedge angle $\rho$r of the light-receiving positioning shim 3411 interposed at the light receiving positioning location between the receiving-positioning surface 452 and the light-receiving base surface 144 so that the projection optical axis Op and the light-receiving axis Or are aligned with each other.

At this time, the projection error angle $\delta\psi p$ measured in S3104 of the light projection sequence and the light-receiving error angle $\delta\psi r$ measured in S3204 of the light receiving sequence are passed on from the respective steps of S3104 and S3204. Therefore, the light-receiving shim-adjustment process is based on the following formula 17, and the wedge angle $\rho r$ (see FIG. 20) of the light-receiving positioning shim 3411 is adjusted as a relative error angle which is the correlation between the projection error angle $\delta\psi p$ and the light-receiving error angle $\delta\psi r$. The relative error angle is the difference between the projection error angle $\delta\psi p$ and the light-receiving error angle $\delta\psi r$.
[Math 17]

$$\rho r = \delta\psi p - \delta\psi r \quad \cdots (17)$$

Next, in the light receiving sequence shown in FIG. 21, the light-receiving positioning process of S3206 is different from S204 in the first embodiment. That is, the light-receiving positioning process of S3206 is to position the receiving-positioning surface 452 in the light-receiving detection module 45 to which the light-receiving lens module 42 was bonded according to S203 by the light-receiving base surface 144 through the light-receiving positioning shim 3411 as shown in FIG. 20, and fix it to the sensor base 14. At this time, the integrated modules 42, 45 are able to jointly form the light-receiving axis Or on the light-receiving reference plane Lr under a deviation configuration in which the deviation amount $\Delta ra$ satisfies the above-mentioned formulas 13 to 16 in accordance with the light-receiving attitude angle deviation $\omega r$ measured in S202 and the light-receiving error angle $\delta\psi r$ measured in S3204.

In this manner, in the third embodiment, the light-receiving positioning shim 3411 is interposed at the light-receiving positioning location between the receiving-positioning surface 452 and the light-receiving base surface 144. According to this, even if the projection error angle $\delta\psi p$ and/or the light-receiving error angle $\delta\psi r$ occurs in the projection optical axis Op and/or the light-receiving axis Or due to the manufacturing tolerance of the deviation configuration caused by the curing shrinkage during bonding, the directions of these optical axes Op, Or can be aligned with each other to absorb the manufacturing tolerance. Therefore, the adjustment accuracy between the projection optical axis Op and the light-receiving axis Or can be ensured.

Furthermore, in the manufacturing method of the third embodiment, the modules 26, 22 are bonded to each other in a state in which the optical center Cp of the light-emitting surface 226 is displaced in the projection adjustment direction Dp relative to the principal point Pp of the projection lens module 26 by a deviation amount $\Delta p$ that correlates to the measured value of the projection-attitude angle deviation $\omega p$. Additionally, in the manufacturing method of the third embodiment, the modules 42, 45 are bonded together in a state in which the optical center Cr of the detection surface 456 is displaced in the light-receiving adjustment direction Dr relative to the principal point Pr of the light-receiving lens module 42 by a deviation amount $\Delta r$ that correlates with the measured value of the light-receiving attitude angle deviation $\omega r$.

However, in the manufacturing method of the third embodiment, even if the projection error angle $\delta\psi p$ occurs on the projection optical axis Op of the projection lens module 26 that is bonded to the projector light source module 22 by the hardening of the projection adhesive 210, the projection error angle $\delta\psi p$ corresponding to the manufacturing tolerance caused by the hardening shrinkage of the projection adhesive 210, can be measured. At the same time, even if a light-receiving error angle $\delta\psi r$ occurs on the light-receiving axis Or of the light-receiving lens module 42 adhered to the light-receiving detection module 45 due to the hardening of the light-receiving adhesive 410, the light-receiving error angle $\delta\psi r$ corresponding to the manufacturing tolerance caused by the hardening shrinkage of the light-receiving adhesive 410 can be measured. From these, in order to align the directions of the projection optical axis Op and the light-receiving axis Or with each other, the wedge angle $\rho r$ of the light-receiving positioning shim 3411 can be accurately adjusted according to a correlation between the projection error angle $\delta\psi p$ and the light-receiving error angle $\delta\psi r$.

According to the manufacturing method of the third embodiment, the projection-positioning surface 222 is positioned and fixed directly by the light-emitting base surface 142, while the receiving-positioning surface 452 is positioned and fixed by the light-receiving base surface 144 via the light-receiving positioning shim 3411. Therefore, the adjustment accuracy of the projection optical axis Op and the light-receiving axis Or can be ensured by matching the directions of these optical axes Op, Or.

Fourth Embodiment

A fourth embodiment is a modification of the first embodiment.

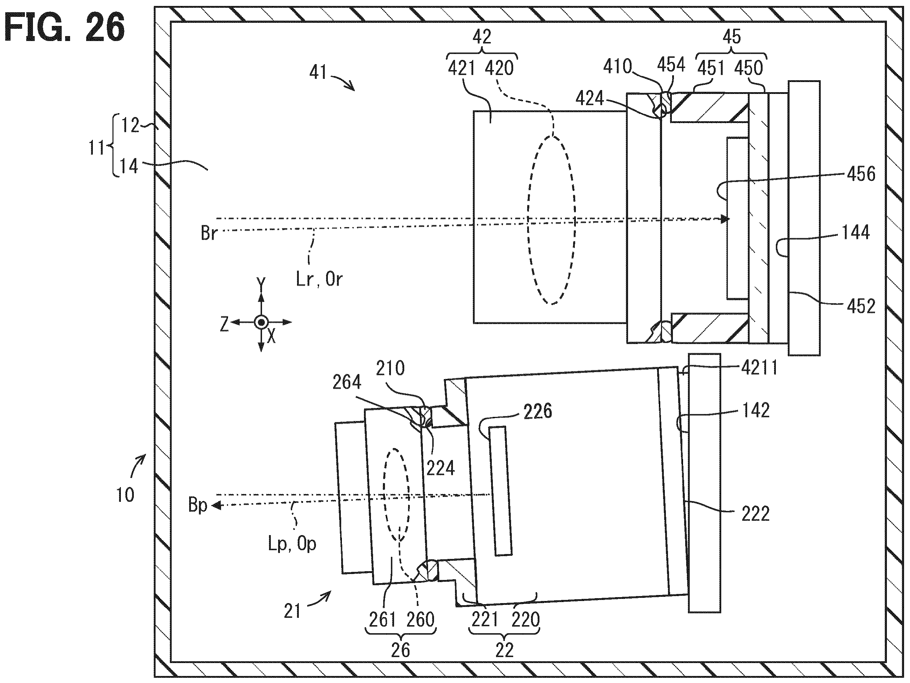

As shown in FIGS. 26 to 28, in the fourth embodiment, adjustment of the light-receiving axis Or is realized by a direct positioning structure constructed at a light receiving positioning location between a receiving-positioning surface 452 and a light-receiving base surface 144 under a displacement configuration that satisfies formulas 13 to 16 in accordance with the third embodiment. On the other hand, in the fourth embodiment, adjustment of the projection optical axis Op is realized by an indirect positioning structure in which a light-projecting positioning shim 4211 is interposed at a light-projecting positioning location between the projection-positioning surface 222 and the light-emitting base surface 142 under a displacement configuration that satisfies formulas 9 to 12 in accordance with the third embodiment. The light-projecting positioning shim 4211 providing this indirect positioning structure forms a wedge angle ρp between the projection-positioning surface 222 and the light-emitting base surface 142 according to a correlation between the projection error angle $\delta\psi p$ and the light-receiving error angle $\delta\psi r$ in the three-dimensional coordinate system. By this composite positioning structure, the projection optical axis Op and the light-receiving axis Or are adjusted to run in substantially the same direction along the projection-reference plane Lp and the light-receiving reference plane Lr, which are substantially parallel to each other.

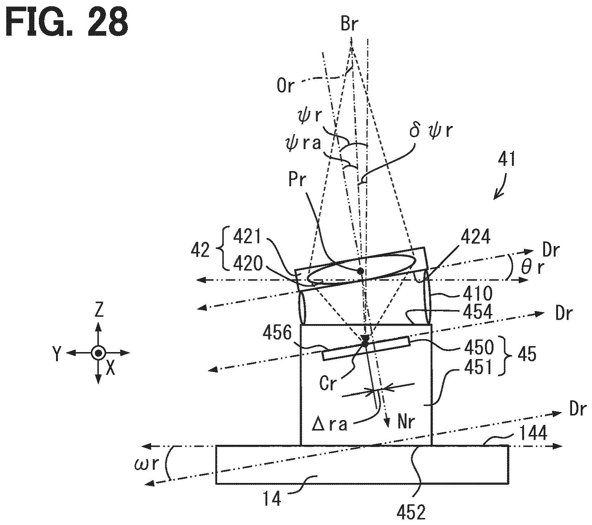

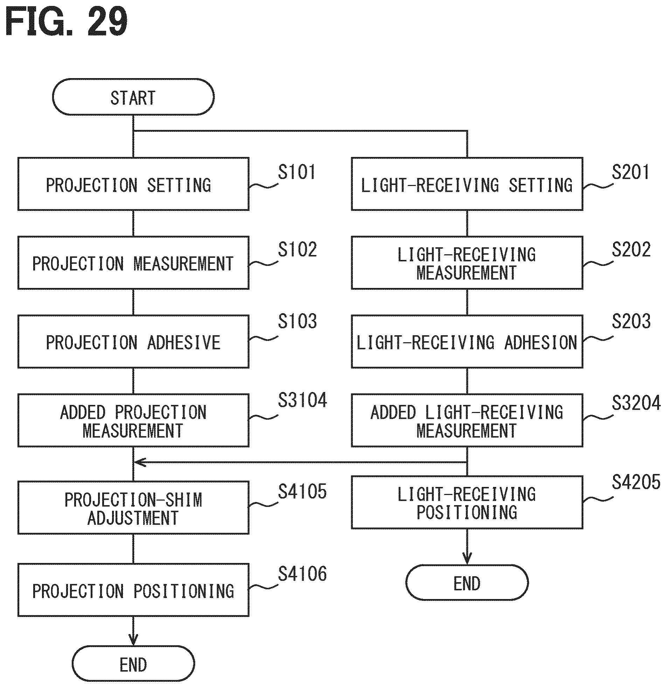

As shown in FIG. 29, in the manufacturing method for the optical sensor 10 according to the fourth embodiment, in the light receiving sequence of the third embodiment, S3205 is omitted, and S3206 is changed to the light-receiving positioning process of S4205. More specifically, in the light-receiving positioning process of S4205, the receiving-positioning surface 452 of the light-receiving detection module 45 to which the light-receiving lens module 42 was attached in S203 is positioned directly by the light-receiving base surface 144 as shown in FIG 28, and fix it to the sensor base 14. At this time, the integrated modules 42, 45 can jointly form the light-receiving axis Or on the light-receiving reference plane Lr under a deviation configuration in which the deviation amount Δra satisfies equations 13 to 16 in accordance with the light-receiving attitude angle deviation ωr measured in S202 and the light-receiving error angle $\delta\psi r$ measured in S3204, and fix it to the sensor base 14.

As shown in FIG. 29, in the manufacturing method of the optical sensor 10 according to the fourth embodiment, in the light projection sequence, S3105 from the third embodiment is changed to the projection positioning process of S4106, and further, a projection-shim adjustment process of S4105 is added between S3104 and S4106. More specifically, the projection-shim adjustment process of S4105 adjusts the wedge angle ρp of the light-projecting positioning shim 4211 interposed at a light-projecting positioning location between the projection-positioning surface 222 and the light-emitting base surface 142 so that the projection optical axis Op and the light-receiving axis or are aligned with each other.

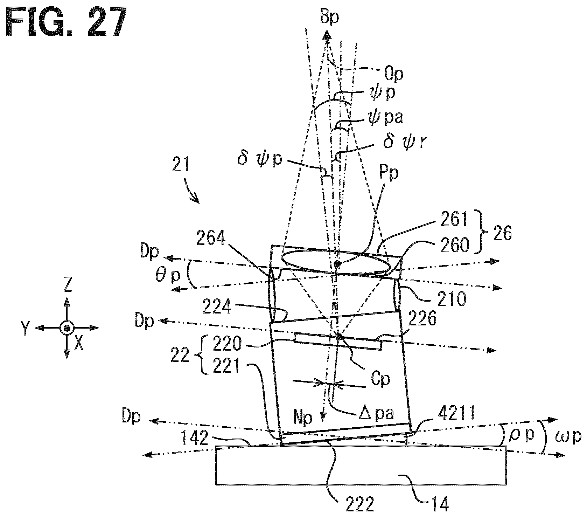

At this time, the projection error angle $\delta\psi p$ measured in S3104 of the light projection sequence and the light-receiving error angle $\delta\psi r$ measured in S3204 of the light receiving sequence are passed on from the respective steps of S3104 and S3204. Therefore, the projection-shim adjustment process adjusts the wedge angle ρp (see FIG. 27) of the light-projecting positioning shim 4211 to a relative error angle that is a difference between the projection error angle $\delta\psi p$ and the light-receiving error angle $\delta\psi r$, based on the following formula 18.

[Math 18]

$$\rho p = \delta\psi r - \delta\psi p \quad \cdots (18)$$

Furthermore, in the projection positioning process of S4106, the projection-positioning surface 222 of the light source module 22 to which the projection lens module 26 was adhered in S103 is positioned by the light-emitting base surface 142 via the light-projecting positioning shim 4211 as shown in FIG. 27, and fixed to the sensor base 14. At this time, the integrated modules 26, 22 are able to jointly form the projection optical axis Op on the projection-reference plane Lp under a deviation configuration in which the deviation amount Δpa satisfies the above-mentioned formulas 9 to 12 in accordance with the projection-attitude angle deviation ωp measured in S102 and the light-projection error angle $\delta\psi p$ measured in S3104.

In this manner, in the fourth embodiment, the light-projecting positioning shim 4211 is interposed at the light-projection positioning location between the projection-positioning surface 222 and the light-emitting base surface 142. According to this, even if the projection error angle $\delta\psi p$ and/or the light-receiving error angle $\delta\psi r$ occurs in the projection optical axis Op and/or the light-receiving axis Or due to the manufacturing tolerance of the deviation configuration caused by the curing shrinkage during bonding, the directions of these optical axes Op, Or can be aligned with each other to absorb the manufacturing tolerance. Therefore, the adjustment accuracy between the projection optical axis Op and the light-receiving axis Or can be ensured.

Furthermore, in the manufacturing method of the fourth embodiment, the modules 26, 22 are bonded to each other in a state in which the optical center Cp of the light-emitting surface 226 is displaced in the projection adjustment direction Dp relative to the principal point Pp of the projection lens module 26 by a deviation amount Δp that correlates to the measured value of the projection-attitude angle deviation ωp. Additionally, in the manufacturing method of the fourth embodiment, the modules 42, 45 are bonded together in a state in which the optical center Cr of the detection surface 456 is displaced in the light-receiving adjustment direction Dr relative to the principal point Pr of the light-receiving lens module 42 by a deviation amount Δr that correlates with the measured value of the light-receiving attitude angle deviation ωr.

However, in the manufacturing method of the fourth embodiment, even if the projection error angle $\delta\psi p$ occurs on the projection optical axis Op of the projection lens module 26 that is bonded to the projector light source module 22 by the hardening of the projection adhesive 210, the projection error angle $\delta\psi p$ corresponding to the manufacturing tolerance caused by the hardening shrinkage of the projection adhesive 210, can be measured. At the same time, even if a light-receiving error angle $\delta\psi r$ occurs on the light-receiving axis Or of the light-receiving lens module 42 adhered to the light-receiving detection module 45 due to the hardening of the light-receiving adhesive 410, the light-receiving error angle $\delta\psi r$ corresponding to the manufacturing tolerance caused by the hardening shrinkage of the light-receiving adhesive 410 can be measured. From these, in order to align the directions of the projection optical axis Op and the light-receiving axis Or with each other, the wedge angle $\rho$p of the light-projecting positioning shim 4211 can be accurately adjusted according to the correlation between the projection error angle $\delta\psi$p and the light-receiving error angle $\delta\psi$r.

According to the manufacturing method of the fourth embodiment, the receiving-positioning surface 452 is positioned and fixed directly by the light-receiving base surface 144, while the projection-positioning surface 222 is positioned and fixed by the light-emitting base surface 142 via the light-projecting positioning shim 4211. Therefore, the adjustment accuracy of the projection optical axis Op and the light-receiving axis Or can be ensured by matching the directions of these optical axes Op, Or.

Fifth Embodiment

A fifth embodiment is a modification obtained by combining the third embodiment and the fourth embodiment and adding an execution function.

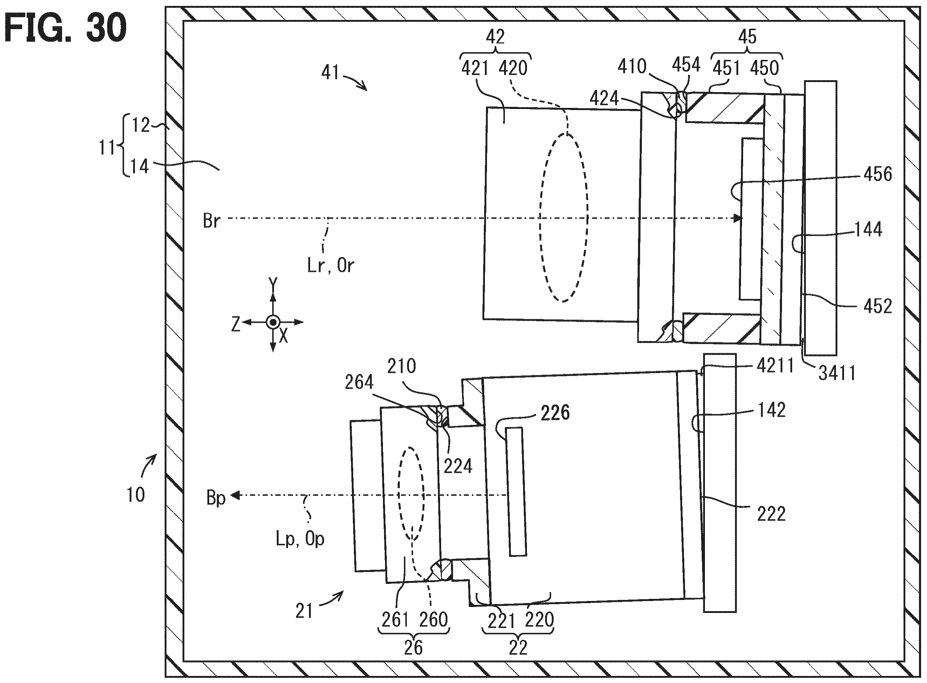

As shown in FIG. 30 to 32, in the fifth embodiment, adjustment of the projection optical axis Op is realized by an indirect positioning structure in which a light-projecting positioning shim 4211 is interposed at a light-projecting positioning location between the projection-positioning surface 222 and the light-emitting base surface 142 under a displacement configuration that satisfies formulas 9 to 12 in accordance with the third embodiment. However, the light-projecting positioning shim 4211 providing this indirect positioning structure forms a wedge angle $\rho$p between the projection-positioning surface 222 and the light-emitting base surface 142, corresponding only to the projection error angle $\delta\psi$p in the three-dimensional coordinate system.

On the other hand, in the fifth embodiment, the adjustment of the light-receiving axis Or is realized by an indirect positioning structure in which a light-receiving positioning shim 3411 is interposed at the light-receiving positioning location between the receiving-positioning surface 452 and the light-receiving base surface 144 under a displacement configuration that satisfies formulas 13 to 16, according to the third embodiment. However, the light-receiving positioning shim 3411 that provides this indirect positioning structure forms the wedge angle $\rho$r between the receiving-positioning surface 452 and the light-receiving base surface 144 according to only the light-receiving error angle $\delta\psi$r in the three-dimensional coordinate system.

Even with the composite positioning structure of the fifth embodiment, the projection optical axis Op and the light-receiving axis Or are adjusted to be substantially in the same direction along the projection-reference plane Lp and the light-receiving reference plane Lr, which are substantially parallel to each other. Here, both the projection-reference plane Lp and the light-receiving reference plane Lr are defined along the XZ-plane. As a result, the projection optical axis Op and the light-receiving axis Or are adjusted on the XZ-plane so as to be mutually offset in the Y-axis direction, realizing a relationship in which they are aligned with each other.

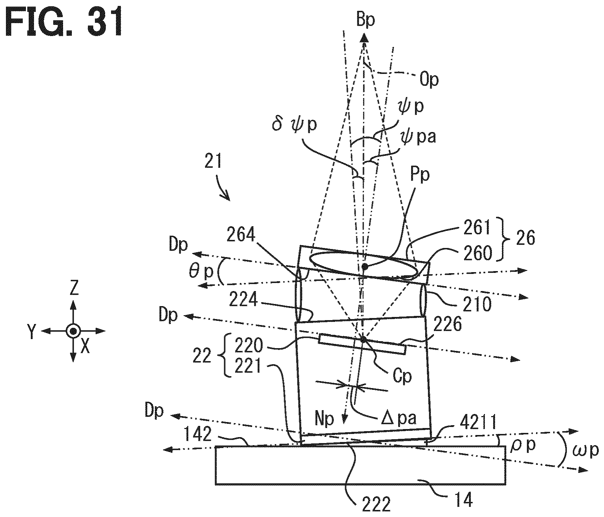

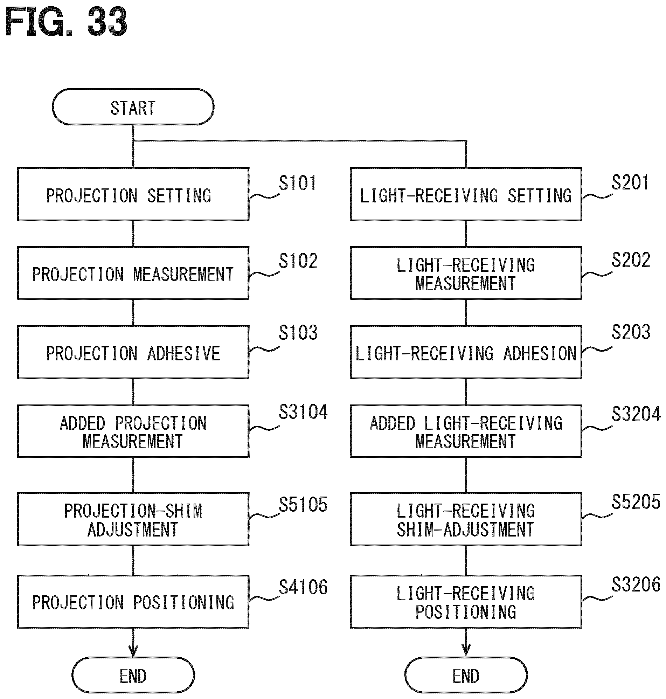

As shown in FIG. 33, in a manufacturing method for an optical sensor 10 according to the fifth embodiment, in the light projection sequence of the fourth embodiment, S4105 is changed to a projection-shim adjustment process of S5105. More specifically, in the projection-shim adjustment process of S5105, the projection error angle $\delta\psi$p measured in S3104 of the light projection sequence is passed on. Therefore, in the projection-shim adjustment process, the wedge angle $\rho$p (see FIG. 31) of the light-projecting positioning shim 4211 is adjusted to an angle correlated only with the projection error angle $\delta\psi$p based on the following formula 19. The projection positioning process of S4106 after this adjustment conforms to the fourth embodiment.

[Math 19]

$$\rho p = -\delta\psi p \quad \cdots (19)$$

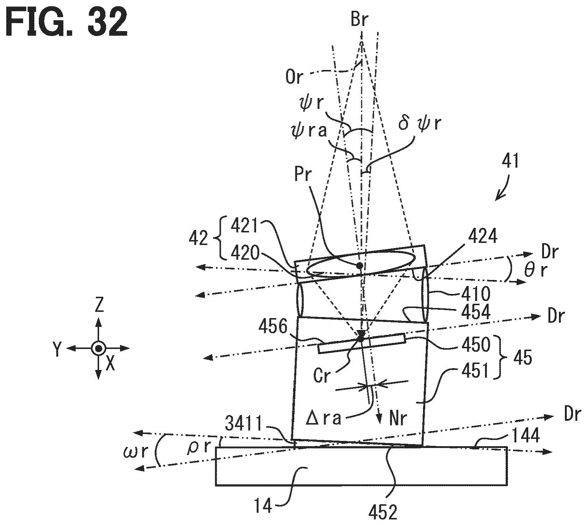

As shown in FIG. 33, in the manufacturing method for the optical sensor 10 according to the fifth embodiment, in the light receiving sequence of the third embodiment, S3205 is changed to the light-receiving shim-adjustment process of S5205. More specifically, in the light-receiving shim-adjustment process of S5205, the light-receiving error angle $\delta\psi$r measured in S3204 of the light receiving sequence is passed on. Therefore, in the light-receiving shim-adjustment process, the wedge angle $\rho$r (see FIG. 32) of the light-receiving positioning shim 3411 is adjusted to an angle correlated only with the light-receiving error angle $\delta\psi$r based on the following formula 20. The light-receiving positioning process of S3206 after this adjustment conforms to the third embodiment.

[Math 20]

$$\rho r = -\delta\psi r \quad \cdots (20)$$

In this manner, in the fifth embodiment, the light-projecting positioning shim 4211 and the light-receiving positioning shim 3411 are interposed at a light-projecting positioning location between the projection-positioning surface 222 and the light-emitting base surface 142, and at a light-receiving positioning location between the receiving-positioning surface 452 and the light-receiving base surface 144, respectively. According to this, even if the projection error angle $\delta\psi$p and/or the light-receiving error angle $\delta\psi$r occurs in the projection optical axis Op and/or the light-receiving axis Or due to the manufacturing tolerance of the deviation configuration caused by the curing shrinkage during bonding, the directions of these optical axes Op, Or can be aligned with each other to absorb the manufacturing tolerance. Therefore, the adjustment accuracy between the projection optical axis Op and the light-receiving axis Or can be ensured.

Furthermore, in the manufacturing method of the fifth embodiment, the modules 26, 22 are bonded to each other in a state in which the optical center Cp of the light-emitting surface 226 is displaced in the projection adjustment direction Dp relative to the principal point Pp of the projection lens module 26 by a deviation amount $\Delta$p that correlates to the measured value of the projection-attitude angle deviation $\omega$p. Additionally, in the manufacturing method of the fourth embodiment, the modules 42, 45 are bonded together in a state in which the optical center Cr of the detection surface 456 is displaced in the light-receiving adjustment direction Dr relative to the principal point Pr of the light-receiving lens module 42 by a deviation amount $\Delta$r that correlates with the measured value of the light-receiving attitude angle deviation $\omega$r.

However, in the manufacturing method of the fifth embodiment, even if the projection error angle $\delta\psi$p occurs on the projection optical axis Op of the projection lens module 26 that is bonded to the projector light source module 22 by the hardening of the projection adhesive 210, the projection error angle $\delta\psi$p corresponding to the manufacturing tolerance caused by the hardening shrinkage of the projection adhesive 210, can be measured. At the same time, even if a light-receiving error angle $\delta\psi$r occurs on the light-receiving axis Or of the light-receiving lens module 42 adhered to the light-receiving detection module 45 due to the hardening of the light-receiving adhesive 410, the light-receiving error angle $\delta\psi$r corresponding to the manufacturing tolerance caused by the hardening shrinkage of the light-receiving adhesive 410 can be measured. From these facts, in order to align the directions of the projection optical axis Op and the light-receiving axis Or with each other, the wedge angle $\rho$p of the light-projecting positioning shim 4211 and the wedge angle $\rho$r of the light-receiving positioning shim 3411 can be accurately adjusted in accordance with the projection error angle $\delta\psi$p and the light-receiving error angle $\delta\psi$r, respectively.

Therefore, according to the manufacturing method of the fifth embodiment, the projection-positioning surface 222 is positioned and fixed by the light-emitting base surface 142 via the light-projecting positioning shim 4211, and the receiving-positioning surface 452 is positioned and fixed by the light-receiving base surface 144 via the light-receiving positioning shim 3411. Therefore, the adjustment accuracy of the projection optical axis Op and the light-receiving axis Or can be ensured by matching the directions of these optical axes Op, Or.

Other Embodiments

Although a plurality of embodiments have been described above, the present disclosure is not to be construed as being limited to these embodiments, and can be applied to various embodiments and combinations within a scope not deviating from the gist of the present disclosure.

In the modified examples of the first and second embodiments, since formula 4 does not hold, any of formulas 1 to 3 does not have to hold. In the modified examples of the first and second embodiments, since formula 8 does not hold, any of formulas 5 to 7 does not have to hold. In a modification on the first and second embodiments, either one of the units 21, 41 may not have the offset arrangement described above.

In the modified examples of the third to fifth embodiments, since formula 12 explained in the first embodiment does not hold, any of formulas 9 to 11 does not have to hold. In the modified examples of the third to fifth embodiments, since formula 16 explained in the first embodiment does not hold, any of formulas 13 to 15 does not have to hold. In a modification, the second embodiment may be applied to the third to fifth embodiments.

In modified examples of the first to fifth embodiments, a Y-axis direction along the horizontal direction and an X-axis direction along the vertical direction may be defined. In modified examples of the first to fifth embodiments, a moving object to which the optical sensor 10 is applied may be, for example, a traveling robot whose traveling can be remotely controlled. In a modification, the optical sensor 10 may be applied to objects other than moving objects, such as stationary structures.

Additional remarks

The present specification discloses a plurality of technical ideas listed below and a plurality of combinations thereof.

Technical Idea 1

An optical sensor is used to detect an external environment by projecting a projected beam (Bp) toward the external environment and receiving a reflected beam (Br) that is reflected from the external environment in response to the projected beam. A three-dimensional coordinate system is defined by an X-axis, a Y-axis, and a Z-axis. The optical sensor includes a light source module (22) having a projection-positioning surface (222) and projecting the projected beam from a light-emitting surface (226). It also includes a projection lens module (26) having a projection-adhesive surface (264) bonded to the light source module, and guiding the projected beam from the light source module to the external environment along a projection optical axis (Op). The sensor base (14) includes a light-emitting base surface (142) to position the projection-positioning surface along the Y-axis. A projection adjustment direction (Dp) perpendicular to the X-axis is assumed to be along the projection-adhesive surface. The projection optical axis on an XZ-plane perpendicular to the light-emitting base surface in the three-dimensional coordinate system is adjusted by displacing an optical center (Cp) of the light-emitting surface of the light source module relative to a principal point (Pp) of the projection lens module in the projection adjustment direction.

Technical Idea 2

An optical sensor is used to detect an external environment by projecting a projected beam (Bp) toward the external environment and receiving a reflected beam (Br) that is reflected from the external environment in response to the projected beam. A three-dimensional coordinate system is defined by an X-axis, a Y-axis, and a Z-axis. The optical sensor includes a light source module (22) having a projection-positioning surface (222) and projecting the projected beam from a light-emitting surface (226). It also includes a projection lens module (26) having a projection-adhesive surface (264) bonded to the light source module and guiding the projected beam from the light source module to the external environment along a projection optical axis (Op). The sensor base (14) includes a light-emitting base surface (142) along the Y-axis for positioning the projection-positioning surface. A projection adjustment direction (Dp) perpendicular to the X-axis is assumed to be along the projection-adhesive surface. The projection optical axis on a projection-reference plane (Lp) perpendicular to a YZ-plane in the three-dimensional coordinate system is adjusted by displacing an optical center (Cp) of the light-emitting surface of the light source module relative to a principal point (Pp) of the projection lens module in the projection adjustment direction.

Technical Idea 3

The optical sensor according to technical idea 1 or 2 includes a deviation amount ($\Delta p$, $\Delta pa$) which is the amount by which the optical center (Cp) of the light-emitting surface deviates relative to the principal point (Pp) of the projection lens module in the projection adjustment direction. The deviation amount correlates with an inclination angle ($\theta p$) of the projection-adhesive surface relative to the light-emitting base surface around the X-axis.

Technical Idea 4

The optical sensor according to any one of technical ideas 1 to 3 includes a deviation amount ($\Delta p$, $\Delta pa$) which is the amount by which the optical center (Cp) of the light-emitting surface deviates relative to the principal point (Pp) of the projection lens module in the projection adjustment direction. The deviation amount correlates with an angle ($\psi p$, $\psi pa$) between a normal direction (Np) of the projection-adhesive surface and the light-projection optical axis around the X-axis.

Technical Idea 5

The optical sensor according to any one of technical ideas 1 to 4 includes a deviation amount ($\Delta p$, $\Delta pa$) which is the amount by which the optical center (Cp) of the light-emitting surface deviates relative to the principal point (Pp) of the projection lens module in the projection adjustment direction. The deviation amount correlates with an attitude angle ($\omega p$) between the projection-positioning surface and the projection-adhesive surface around the X-axis.

Technical Idea 6

The optical sensor according to any one of technical ideas 1 to 5 further includes a housing (2011) having the sensor base. The sensor base holds the projection lens module, and the housing has a heat dissipation part (2016) for radiating heat conducted from the sensor base via the light source module to the external environment.

Technical Idea 7

The optical sensor according to any one of technical ideas 1 and any one of technical ideas 3 to 6, which are subordinate to technical idea 1, further includes a light-receiving detection module (45) having a receiving-positioning surface (452) and detecting the external environment by receiving the reflected beam on a detection surface (456). The optical sensor also includes a light-receiving lens module (42) having a receiving-adhesive surface (424) that is bonded to the light-receiving detection module and guiding the reflected beam from the external environment to the light-receiving detection module along a light-receiving axis (Or). The sensor base has a light-receiving base surface (144) that positions the receiving-positioning surface along the Y-axis. A light-receiving adjustment direction (Dr) perpendicular to the X-axis is assumed to be along the receiving-adhesive surface. The light-receiving axis on the XZ-plane perpendicular to the light-receiving base surface in the three-dimensional coordinate system is adjusted by displacing an optical center (Cr) of the detection surface in the light-receiving detection module relative to a principal point (Pr) of the light-receiving lens module in the light-receiving adjustment direction.

Technical Idea 8

An optical sensor is designed to detect an external environment by projecting a projected beam (Bp) toward the external environment and receiving a reflected beam (Br) that is reflected from the external environment in response to the projected beam. A three-dimensional coordinate system is defined by an X-axis, a Y-axis, and a Z-axis. The optical sensor includes a light-receiving detection module (45) having a receiving-positioning surface (452) and detecting the external environment by receiving the reflected beam on a detection surface (456). The optical sensor also includes a light-receiving lens module (42) having a receiving-adhesive surface (424) that is bonded to the light-receiving detection module and guiding the reflected beam from the external environment to the light-receiving detection module along a light-receiving axis (Or). The sensor base (14) has a light-receiving base surface (144) that positions the receiving-positioning surface along the Y-axis. A light-receiving adjustment direction (Dr) perpendicular to the X-axis is assumed to be along the receiving-adhesive surface. The light-receiving axis on the XZ-plane perpendicular to the light-receiving base surface in the three-dimensional coordinate system is adjusted by displacing an optical center (Cr) of the detection surface in the light-receiving detection module relative to a principal point (Pr) of the light-receiving lens module in the light-receiving adjustment direction.

Technical Idea 9

The optical sensor according to technical idea 2 and any one of technical ideas 3 to 6, which are subordinate to technical idea 2 further includes a light-receiving detection module (45) having a receiving-positioning surface (452) and detecting the external environment by receiving the reflected beam on a detection surface (456). The optical sensor also includes a light-receiving lens module (42) having a receiving-adhesive surface (424) that is bonded to the light-receiving detection module and guiding the reflected beam from the external environment to the light-receiving detection module along a light-receiving axis (Or). The sensor base has a light-receiving base surface (144) along the Y-axis for positioning the receiving-positioning surface. A light-receiving adjustment direction (Dr) perpendicular to the X-axis is assumed to be along the receiving-adhesive surface. The light-receiving axis on a light-receiving reference plane perpendicular to the YZ-plane in the three-dimensional coordinate system is adjusted by displacing an optical center (Cr) of the detection surface in the light-receiving detection module relative to a principal point (Pr) of the light-receiving lens module in the light-receiving adjustment direction.

Technical Idea 10

The optical sensor according to technical idea 9 further includes a positioning shim (3411, 4211) interposed in at least one of a light-projecting positioning location and a light-receiving positioning location. The light-projecting positioning location is between the projection-positioning surface and the light-emitting base surface, ensuring that the projection optical axis and the light-receiving axis are aligned with each other in the three-dimensional coordinate system. The light-receiving positioning location is between the receiving-positioning surface and the light-receiving base surface, ensuring that the projection optical axis and the light-receiving axis are aligned with each other in the three-dimensional coordinate system.

Technical Idea 11

An optical sensor is designed to detect an external environment by projecting a projected beam (Bp) toward the external environment and receiving a reflected beam (Br) that is reflected from the external environment in response to the projected beam. A three-dimensional coordinate system is defined by an X-axis, a Y-axis, and a Z-axis. The optical sensor includes a light-receiving detection module (45) having a receiving-positioning surface (452) and detecting the external environment by receiving the reflected beam on a detection surface (456). The optical sensor also includes a light-receiving lens module (42) having a receiving-adhesive surface (424) that is bonded to the light-receiving detection module and guiding the reflected beam from the external environment to the light-receiving detection module along a light-receiving axis (Or). The sensor base (14) has a light-receiving base surface (144) along the Y-axis for positioning the receiving-positioning surface. A light-receiving adjustment direction (Dr) perpendicular to the X-axis is assumed to be along the receiving-adhesive surface. The light-receiving axis on a light-receiving reference plane perpendicular to a YZ-plane in the three-dimensional coordinate system is adjusted by displacing an optical center (Cr) of the detection surface in the light-receiving detection module relative to a principal point (Pr) of the light-receiving lens module in the light-receiving adjustment direction.

Technical idea 12

The optical sensor according to any one of technical ideas 7 to 11 includes a deviation amount ($\Delta r$, $\Delta ra$) which is the amount of the optical center (Cr) of the detection surface in the light-receiving adjustment direction relative to the principal point (Pr) of the light-receiving lens module. The deviation amount correlates with an inclination angle ($\theta r$) of the receiving-adhesive surface relative to the light-receiving base surface around the X-axis.

Technical idea 13

The optical sensor according to any one of technical ideas 7 to 12 includes a deviation amount ($\Delta r$, $\Delta ra$) which is the amount by which the optical center (Cr) of the detection surface in the light-receiving adjustment direction deviates relative to the principal point (Pr) of the light-receiving lens module. The deviation amount correlates to an angle ($\psi r$, $\psi ra$) between a normal direction (Nr) of the receiving-adhesive surface and the light-receiving axis around the X-axis.

Technical idea 14

The optical sensor according to any one of technical ideas 7 to 13 includes a deviation amount ($\Delta r$, $\Delta ra$) which is the amount by which the optical center (Cr) of the detection surface in the light-receiving adjustment direction deviates relative to the principal point (Pr) of the light-receiving lens module. The deviation amount correlates with an attitude angle ($\omega p$) between the receiving-positioning surface and the receiving-adhesive surface around the X-axis.

Technical idea 15

The optical sensor according to any one of technical ideas 7 to 14 further includes a housing (2011) that includes the sensor base. The sensor base holds the light-receiving lens module, and the housing has a heat dissipation part (2016) for radiating heat conducted from the sensor base via the light-receiving detection module to the external environment.

Technical idea 16

A manufacturing method for manufacturing the optical sensor according to any one of technical ideas 1 to 7 includes measuring an attitude angle ($\omega p$) between the projection-positioning surface and the projection-adhesive surface around the X-axis in a focused state of the projected beam. The method also includes bonding the projection-adhesive surface of the projection lens module to the light source module in a state in which an optical center (Cp) of the light-emitting surface is displaced with respect to a principal point (Pp) of the projection lens module in the projection adjustment direction by a deviation amount ($\Delta p$) correlated to a measurement value of the attitude angle. Additionally, the method includes fixing the projection-positioning surface of the light source module to which the projection lens module is bonded to the sensor base by positioning the projection-positioning surface using the light-emitting base surface.

Technical idea 17

A manufacturing method for manufacturing the optical sensor according to any one of technical ideas 7 to 15 8 includes measuring an attitude angle ($\omega r$) between the receiving-positioning surface and the receiving-adhesive surface around the X-axis in a focused state of the reflected beam. The method also includes bonding the receiving-adhesive surface of the light-receiving lens module to the light-receiving detection module in a state in which the optical center (Cr) of the detection surface is displaced with respect to the principal point (Pr) of the light-receiving lens module in the light-receiving adjustment direction by a deviation amount ($\Delta r$) correlated to the measured value of the attitude angle. Additionally, the method includes fixing the receiving-positioning surface of the light-receiving detection module to which the light-receiving lens module is bonded to the sensor base by positioning the receiving-positioning surface using the light-receiving base surface.

Technical idea 18

A manufacturing method for manufacturing the optical sensor according to technical idea 10 and any one of technical ideas 12 to 15, which are subordinate to technical idea 10, includes measuring a projection-attitude angle ($\omega$p) between the projection-positioning surface and the projection-adhesive surface around the X-axis in a focused state of the projected beam. The method also includes bonding the projection-adhesive surface of the projection lens module to the light source module via projection adhesive (210) in a state in which an optical center (Cp) of the light-emitting surface is displaced with respect to a principal point (Pp) of the projection lens module in the projection adjustment direction by a deviation amount ($\Delta$p) correlated to a measurement value of the projection-attitude angle. Additionally, the method includes measuring a projection error angle ($\delta\psi$p) in the three-dimensional coordinate system on the projection optical axis of the projection lens module bonded to the light source module by hardening of the projection adhesive. The method further includes measuring a receiving-attitude angle ($\omega$r) between the receiving-positioning surface and the receiving-adhesive surface around the X-axis in a focused state of the reflected beam. The method also includes bonding the receiving-adhesive surface of the light-receiving lens module to the light-receiving detection module via light-receiving adhesive (410) in a state in which the optical center (Cr) of the detection surface is displaced with respect to the principal point (Pr) of the light-receiving lens module in the light-receiving adjustment direction by a deviation amount ($\Delta$r) correlated to the measured value of the receiving-attitude angle. The method includes measuring a light-receiving error angle ($\delta\psi$r) in the three-dimensional coordinate system with respect to the light-receiving axis of the light-receiving lens module bonded to the light-receiving detection module by hardening of the light-receiving adhesive. The method also includes adjusting a wedge angle ($\rho$r) of a light-receiving positioning shim (3411), which is a positioning shim interposed at the light-receiving positioning location so that the projection optical axis and the light-receiving axis are aligned with each other, in accordance with a correlation between the projection error angle and the light-receiving error angle. Additionally, the method includes fixing the projection-positioning surface of the light source module to which the projection lens module is bonded to the sensor base by positioning the projection-positioning surface using the light-emitting base surface. Finally, the method includes fixing the receiving-positioning surface of the light-receiving detection module to which the light-receiving lens module is bonded to the sensor base by positioning the receiving-positioning surface by the light-receiving positioning shim using the light-receiving base surface.

Technical feature 19

A manufacturing method for manufacturing the optical sensor according to technical idea 10 and any one of technical ideas 12 to 15, which are subordinate to technical idea 10, includes measuring a projection-attitude angle ($\omega$p) between the projection-positioning surface and the projection-adhesive surface around the X-axis in a focused state of the projected beam. The method also includes bonding the projection-adhesive surface of the projection lens module to the light source module via projection adhesive (210) in a state in which an optical center (Cp) of the light-emitting surface is displaced with respect to a principal point (Pp) of the projection lens module in the projection adjustment direction by a deviation amount ($\Delta$p) correlated to a measurement value of the projection-attitude angle. Additionally, the method includes measuring a projection error angle ($\delta\psi$p) in the three-dimensional coordinate system on the projection optical axis of the projection lens module bonded to the light source module by hardening of the projection adhesive. The method further includes measuring a receiving-attitude angle ($\omega$r) between the receiving-positioning surface and the receiving-adhesive surface around the X-axis in a focused state of the reflected beam. The method also includes bonding the receiving-adhesive surface of the light-receiving lens module to the light-receiving detection module via light-receiving adhesive (410) in a state in which the optical center (Cr) of the detection surface is displaced with respect to the principal point (Pr) of the light-receiving lens module in the light-receiving adjustment direction by a deviation amount ($\Delta$r) correlated to the measured value of the receiving-attitude angle. The method includes measuring a light-receiving error angle ($\delta\psi$r) in the three-dimensional coordinate system with respect to the light-receiving axis of the light-receiving lens module bonded to the light-receiving detection module by hardening of the light-receiving adhesive. The method also includes adjusting a wedge angle ($\rho$p) of a light-projecting positioning shim (4211), which is a positioning shim interposed at the light-projecting positioning location so that the projection optical axis and the light-receiving axis are aligned with each other, in accordance with a correlation between the projection error angle and the light-receiving error angle. Additionally, the method includes fixing the projection-positioning surface of the light source module to which the projection lens module is bonded to the sensor base by positioning the projection-positioning surface by the light-projecting positioning shim using the light-emitting base surface. Finally, the method includes fixing the receiving-positioning surface of the light-receiving detection module to which the light-receiving lens module is bonded to the sensor base by positioning the receiving-positioning surface using the light-receiving base surface.

Technical feature 20

A manufacturing method for manufacturing the optical sensor according to technical idea 10 and any one of technical ideas 12 to 15, which are subordinate to technical idea 10, includes measuring a projection-attitude angle ($\omega$p) between the projection-positioning surface and the projection-adhesive surface around the X-axis in a focused state of the projected beam. The method also includes bonding the projection-adhesive surface of the projection lens module to the light source module via projection adhesive (210) in a state in which an optical center (Cp) of the light-emitting surface is displaced with respect to a principal point (Pp) of the projection lens module in the projection adjustment direction by a deviation amount ($\Delta$p) correlated to a measurement value of the projection-attitude angle. Additionally, the method includes measuring a projection error angle ($\delta\psi$p) in the three-dimensional coordinate system on the projection optical axis of the projection lens module bonded to the light source module by hardening of the projection adhesive. The method further includes measuring a receiving-attitude angle ($\omega$r) between the receiving-positioning surface and the receiving-adhesive surface around the X-axis in a focused state of the reflected beam. The method also includes bonding the receiving-adhesive surface of the light-receiving lens module to the light-receiving detection module via light-receiving adhesive (410) in a state in which the optical center (Cr) of the detection surface is displaced with respect to the principal point (Pr) of the light-receiving lens module in the light-receiving adjustment direction by a deviation amount ($\Delta$r) correlated to the measured value of the receiving-attitude angle. The method includes measuring a light-receiving error angle ($\delta\psi$r) in the three-dimensional coordinate system with respect to the light-receiving axis of the light-receiving lens module bonded to the light-receiving detection module by hardening of the light-receiving adhesive. The method also includes adjusting a wedge angle ($\rho$p) of a light-projecting positioning shim (4211), which is a positioning shim interposed at the light-projecting positioning location so that the projection optical axis and the light-receiving axis are aligned with each other, in accordance with the projection error angle. Additionally, the method includes adjusting a wedge angle ($\rho$r) of a light-receiving positioning shim (3411), which is a positioning shim interposed at the light-receiving positioning location so that the projection optical axis and the light-receiving axis are aligned with each other, in accordance with the light-receiving error angle. The method further includes fixing the projection-positioning surface of the light source module to which the projection lens module is bonded to the sensor base by positioning the projection-positioning surface by the light-projecting positioning shim using the light-emitting base surface. Finally, the method includes fixing the receiving-positioning surface of the light-receiving detection module to which the light-receiving lens module is bonded to the sensor base by positioning the receiving-positioning surface by the light-receiving positioning shim using the light-receiving base surface.

**Claims**

1.  An optical sensor configured to detect an external environment by projecting a projected beam (Bp) toward the external environment and receiving a reflected beam (Br) that is reflected from the external environment in response to the projected beam, wherein

    a three-dimensional coordinate system is defined by an X-axis, a Y-axis, and a Z-axis,
    the optical sensor comprising:

        a light source module (22) having a projection-positioning surface (222) and projecting the projected beam from a light-emitting surface (226);
        a projection lens module (26) having a projection-adhesive surface (264) bonded to the light source module, and guiding the projected beam from the light source module to the external environment along a projection optical axis (Op); and
        a sensor base (14) having a light-emitting base surface (142) configured to position the projection-positioning surface along the Y-axis,

    a projection adjustment direction (Dp) perpendicular to the X-axis is assumed to be along the projection-adhesive surface, and
    the projection optical axis on an XZ-plane perpendicular to the light-emitting base surface in the three-dimensional coordinate system is adjusted by displacing an optical center (Cp) of the light-emitting surface of the light source module relative to a principal point (Pp) of the projection lens module in the projection adjustment direction.

2.  An optical sensor configured to detect an external environment by projecting a projected beam (Bp) toward the external environment and receiving a reflected beam (Br) that is reflected from the external environment in response to the projected beam, wherein

a three-dimensional coordinate system is defined by an X-axis, a Y-axis, and a Z-axis,
the optical sensor comprising:

a light source module (22) having a projection-positioning surface (222) and projecting the projected beam from a light-emitting surface (226);
a projection lens module (26) having a projection-adhesive surface (264) bonded to the light source module, and guiding the projected beam from the light source module to the external environment along a projection optical axis (Op); and
a sensor base (14) having a light-emitting base surface (142) along the Y-axis for positioning the projection-positioning surface,

a projection adjustment direction (Dp) perpendicular to the X-axis is assumed to be along the projection-adhesive surface, and
the projection optical axis on a projection-reference plane (Lp) perpendicular to a YZ-plane in the three-dimensional coordinate system is adjusted by displacing an optical center (Cp) of the light-emitting surface of the light source module relative to a principal point (Pp) of the projection lens module in the projection adjustment direction.

3. The optical sensor according to claim 1 or 2, wherein

a deviation amount ($\Delta p$, $\Delta pa$) is an amount by which the optical center (Cp) of the light-emitting surface deviates relative to the principal point (Pp) of the projection lens module in the projection adjustment direction, and
the deviation amount correlates with an inclination angle ($\theta p$) of the projection-adhesive surface relative to the light-emitting base surface around the X-axis.

4. The optical sensor according to claim 1 or 2, wherein

a deviation amount ($\Delta p$, $\Delta pa$) is an amount by which the optical center (Cp) of the light-emitting surface deviates relative to the principal point (Pp) of the projection lens module in the projection adjustment direction, and
the deviation amount correlates with an angle ($\psi p$, $\psi pa$) between a normal direction (Np) of the projection-adhesive surface and the light-projection optical axis around the X-axis.

5. The optical sensor according to claim 1 or 2, wherein

a deviation amount ($\Delta p$, $\Delta pa$) is an amount by which the optical center (Cp) of the light-emitting surface deviates relative to the principal point (Pp) of the projection lens module in the projection adjustment direction, and
the deviation amount correlates with an attitude angle ($\omega p$) between the projection-positioning surface and the projection-adhesive surface around the X-axis.

6. The optical sensor according to claim 1 or 2, further comprising

a housing (2011) including the sensor base, wherein
the sensor base holds the projection lens module, and
the housing has a heat dissipation part (2016) for radiating heat conducted from the sensor base via the light source module to the external environment.

7. The optical sensor according to claim 1, further comprising:

a light-receiving detection module (45) having a receiving-positioning surface (452) and detecting the external environment by receiving the reflected beam on a detection surface (456); and
a light-receiving lens module (42) having a receiving-adhesive surface (424) that is bonded to the light-receiving detection module, and guiding the reflected beam from the external environment to the light-receiving detection module along a light-receiving axis (Or), wherein
the sensor base has a light-receiving base surface (144) that positions the receiving-positioning surface along the Y-axis,
a light-receiving adjustment direction (Dr) perpendicular to the X-axis is assumed to be along the receiving-adhesive surface, and
the light-receiving axis on the XZ-plane perpendicular to the light-receiving base surface in the three-dimensional coordinate system is adjusted by displacing an optical center (Cr) of the detection surface in the light-receiving detection module relative to a principal point (Pr) of the light-receiving lens module in the light-receiving adjustment direction.

8. An optical sensor configured to detect an external environment by projecting a projected beam (Bp) toward the external environment and receiving a reflected beam (Br) that is reflected from the external environment in response to the projected beam, wherein

a three-dimensional coordinate system is defined by an X-axis, a Y-axis, and a Z-axis, the optical sensor comprising:

a light-receiving detection module (45) having a receiving-positioning surface (452) and detecting the external environment by receiving the reflected beam on a detection surface (456); a light-receiving lens module (42) having a receiving-adhesive surface (424) that is bonded to the light-receiving detection module, and guiding the reflected beam from the external environment to the light-receiving detection module along a light-receiving axis (Or); and a sensor base (14) having a light-receiving base surface (144) that positions the receiving-positioning surface along the Y-axis,

a light-receiving adjustment direction (Dr) perpendicular to the X-axis is assumed to be along the receiving-adhesive surface, and the light-receiving axis on the XZ-plane perpendicular to the light-receiving base surface in the three-dimensional coordinate system is adjusted by displacing an optical center (Cr) of the detection surface in the light-receiving detection module relative to a principal point (Pr) of the light-receiving lens module in the light-receiving adjustment direction.

9. The optical sensor according to claim 2, further comprising:

a light-receiving detection module (45) having a receiving-positioning surface (452) and detecting the external environment by receiving the reflected beam on a detection surface (456); and a light-receiving lens module (42) having a receiving-adhesive surface (424) that is bonded to the light-receiving detection module, and guiding the reflected beam from the external environment to the light-receiving detection module along a light-receiving axis (Or), wherein the sensor base has a light-receiving base surface (144) along the Y-axis for positioning the receiving-positioning surface, a light-receiving adjustment direction (Dr) perpendicular to the X-axis is assumed to be along the receiving-adhesive surface, and the light-receiving axis on a light-receiving reference plane perpendicular to the YZ-plane in the three-dimensional coordinate system is adjusted by displacing an optical center (Cr) of the detection surface in the light-receiving detection module relative to a principal point (Pr) of the light-receiving lens module in the light-receiving adjustment direction.

10. The optical sensor according to claim 9, further comprising

a positioning shim (3411, 4211) interposed in at least one of a light-projecting positioning location and a light-receiving positioning location, the light-projecting positioning location is between the projection-positioning surface and the light-emitting base surface so that the projection optical axis and the light-receiving axis are aligned with each other in the three-dimensional coordinate system, and the light-receiving positioning location is between the receiving-positioning surface and the light-receiving base surface so that the projection optical axis and the light-receiving axis are aligned with each other in the three-dimensional coordinate system.

11. An optical sensor configured to detect an external environment by projecting a projected beam (Bp) toward the external environment and receiving a reflected beam (Br) that is reflected from the external environment in response to the projected beam, wherein

a three-dimensional coordinate system is defined by an X-axis, a Y-axis, and a Z-axis,

the optical sensor comprising:

a light-receiving detection module (45) having a receiving-positioning surface (452) and detecting the external environment by receiving the reflected beam on a detection surface (456);

a light-receiving lens module (42) having a receiving-adhesive surface (424) that is bonded to the light-receiving detection module, and guiding the reflected beam from the external environment to the light-receiving detection module along a light-receiving axis (Or); and

a sensor base (14) having a light-receiving base surface (144) along the Y-axis for positioning the receiving-positioning surface,

a light-receiving adjustment direction (Dr) perpendicular to the X-axis is assumed to be along the receiving-adhesive surface, and

the light-receiving axis on a light-receiving reference plane perpendicular to a YZ-plane in the three-dimensional coordinate system is adjusted by displacing an optical center (Cr) of the detection surface in the light-receiving detection module relative to a principal point (Pr) of the light-receiving lens module in the light-receiving adjustment direction.

12. The optical sensor according to any one of claims 7 to 11, wherein

a deviation amount ($\Delta r$, $\Delta ra$) is an amount by which the optical center (Cr) of the detection surface in the light-receiving adjustment direction deviates relative to the principal point (Pr) of the light-receiving lens module, and

the deviation amount correlates with an inclination angle ($\theta r$) of the receiving-adhesive surface relative to the light-receiving base surface around the X-axis.

13. The optical sensor according to any one of claims 7 to 11, wherein

a deviation amount ($\Delta r$, $\Delta ra$) is an amount by which the optical center (Cr) of the detection surface in the light-receiving adjustment direction deviates relative to the principal point (Pr) of the light-receiving lens module, and

the deviation amount correlates to an angle ($\psi r$, $\psi ra$) between a normal direction (Nr) of the receiving-adhesive surface and the light-receiving axis around the X-axis.

14. The optical sensor according to any one of claims 7 to 11, wherein

a deviation amount ($\Delta r$, $\Delta ra$) is an amount by which the optical center (Cr) of the detection surface in the light-receiving adjustment direction deviates relative to the principal point (Pr) of the light-receiving lens module, and

the deviation amount with an attitude angle ($\omega p$) between the receiving-positioning surface and the receiving-adhesive surface around the X-axis.

15. The optical sensor according to any one of claims 7 to 11, further comprising

a housing (2011) including the sensor base, wherein

the sensor base holds the light-receiving lens module, and

the housing has a heat dissipation part (2016) for radiating heat conducted from the sensor base via the light-receiving detection module to the external environment.

16. A manufacturing method for manufacturing the optical sensor according to claim 1, comprising:

measuring an attitude angle ($\omega p$) between the projection-positioning surface and the projection-adhesive surface around the X-axis in a focused state of the projected beam;

bonding the projection-adhesive surface of the projection lens module to the light source module in a state in which an optical center (Cp) of the light-emitting surface is displaced with respect to a principal point (Pp) of the projection lens module in the projection adjustment direction by a deviation amount ($\Delta p$) correlated to a measurement value of the attitude angle; and

fixing the projection-positioning surface of the light source module to which the projection lens module is bonded to the sensor base by positioning the projection-positioning surface using the light-emitting base surface.

17. A manufacturing method for manufacturing the optical sensor according to claim 7 or 8, comprising:

measuring an attitude angle ($\omega$r) between the receiving-positioning surface and the receiving-adhesive surface around the X-axis in a focused state of the reflected beam;

bonding the receiving-adhesive surface of the light-receiving lens module to the light-receiving detection module in a state in which the optical center (Cr) of the detection surface is displaced with respect to the principal point (Pr) of the light-receiving lens module in the light-receiving adjustment direction by a deviation amount ($\Delta$r) correlated to the measured value of the attitude angle; and

fixing the receiving-positioning surface of the light-receiving detection module to which the light-receiving lens module is bonded to the sensor base by positioning the receiving-positioning surface using the light-receiving base surface.

**18.** A manufacturing method for manufacturing the optical sensor according to claim 10, comprising:

measuring a projection-attitude angle ($\omega$p) between the projection-positioning surface and the projection-adhesive surface around the X-axis in a focused state of the projected beam;

bonding the projection-adhesive surface of the projection lens module to the light source module via projection adhesive (210) in a state in which an optical center (Cp) of the light-emitting surface is displaced with respect to a principal point (Pp) of the projection lens module in the projection adjustment direction by a deviation amount ($\Delta$p) correlated to a measurement value of the projection-attitude angle;

measuring a projection error angle ($\delta\psi$p) in the three-dimensional coordinate system on the projection optical axis of the projection lens module bonded to the light source module by hardening of the projection adhesive;

measuring a receiving-attitude angle ($\omega$r) between the receiving-positioning surface and the receiving-adhesive surface around the X-axis in a focused state of the reflected beam;

bonding the receiving-adhesive surface of the light-receiving lens module to the light-receiving detection module via light-receiving adhesive (410) in a state in which the optical center (Cr) of the detection surface is displaced with respect to the principal point (Pr) of the light-receiving lens module in the light-receiving adjustment direction by a deviation amount ($\Delta$r) correlated to the measured value of the receiving-attitude angle;

measuring a light-receiving error angle ($\delta\psi$r) in the three-dimensional coordinate system with respect to the light-receiving axis of the light-receiving lens module bonded to the light-receiving detection module by hardening of the light-receiving adhesive;

adjusting a wedge angle ($\rho$r) of a light-receiving positioning shim (3411), which is a positioning shim interposed at the light-receiving positioning location so that the projection optical axis and the light-receiving axis are aligned with each other, in accordance with a correlation between the projection error angle and the light-receiving error angle;

fixing the projection-positioning surface of the light source module to which the projection lens module is bonded to the sensor base by positioning the projection-positioning surface using the light-emitting base surface; and

fixing the receiving-positioning surface of the light-receiving detection module to which the light-receiving lens module is bonded to the sensor base by positioning the receiving-positioning surface by the light-receiving positioning shim using the light-receiving base surface.

**19.** A manufacturing method for manufacturing the optical sensor according to claim 10, comprising:

measuring a projection-attitude angle ($\omega$p) between the projection-positioning surface and the projection-adhesive surface around the X-axis in a focused state of the projected beam;

bonding the projection-adhesive surface of the projection lens module to the light source module via projection adhesive (210) in a state in which an optical center (Cp) of the light-emitting surface is displaced with respect to a principal point (Pp) of the projection lens module in the projection adjustment direction by a deviation amount ($\Delta$p) correlated to a measurement value of the projection-attitude angle;

measuring a projection error angle ($\delta\psi$p) in the three-dimensional coordinate system on the projection optical axis of the projection lens module bonded to the light source module by hardening of the projection adhesive;

measuring a receiving-attitude angle ($\omega$r) between the receiving-positioning surface and the receiving-adhesive surface around the X-axis in a focused state of the reflected beam;

bonding the receiving-adhesive surface of the light-receiving lens module to the light-receiving detection module via light-receiving adhesive (410) in a state in which the optical center (Cr) of the detection surface is displaced with respect to the principal point (Pr) of the light-receiving lens module in the light-receiving adjustment direction by a deviation amount ($\Delta$r) correlated to the measured value of the receiving-attitude angle;

measuring a light-receiving error angle ($\delta\psi$r) in the three-dimensional coordinate system with respect to the light-receiving axis of the light-receiving lens module bonded to the light-receiving detection module by hardening of the light-receiving adhesive;

**EP 4 667 965 A1**

adjusting a wedge angle ($\rho$p) of a light-projecting positioning shim (4211), which is a positioning shim interposed at the light-projecting positioning location so that the projection optical axis and the light-receiving axis are aligned with each other, in accordance with a correlation between the projection error angle and the light-receiving error angle;

fixing the projection-positioning surface of the light source module to which the projection lens module is bonded to the sensor base by positioning the projection-positioning surface by the light-projecting positioning shim using the light-emitting base surface; and

fixing the receiving-positioning surface of the light-receiving detection module to which the light-receiving lens module is bonded to the sensor base by positioning the receiving-positioning surface using the light-receiving base surface.

20. A manufacturing method for manufacturing the optical sensor according to claim 10, comprising:

measuring a projection-attitude angle ($\omega$p) between the projection-positioning surface and the projection-adhesive surface around the X-axis in a focused state of the projected beam;

bonding the projection-adhesive surface of the projection lens module to the light source module via projection adhesive (210) in a state in which an optical center (Cp) of the light-emitting surface is displaced with respect to a principal point (Pp) of the projection lens module in the projection adjustment direction by a deviation amount ($\Delta$p) correlated to a measurement value of the projection-attitude angle;

measuring a projection error angle ($\delta\psi$p) in the three-dimensional coordinate system on the projection optical axis of the projection lens module bonded to the light source module by hardening of the projection adhesive;

measuring a receiving-attitude angle ($\omega$r) between the receiving-positioning surface and the receiving-adhesive surface around the X-axis in a focused state of the reflected beam;

bonding the receiving-adhesive surface of the light-receiving lens module to the light-receiving detection module via light-receiving adhesive (410) in a state in which the optical center (Cr) of the detection surface is displaced with respect to the principal point (Pr) of the light-receiving lens module in the light-receiving adjustment direction by a deviation amount ($\Delta$r) correlated to the measured value of the receiving-attitude angle;

measuring a light-receiving error angle ($\delta\psi$r) in the three-dimensional coordinate system with respect to the light-receiving axis of the light-receiving lens module bonded to the light-receiving detection module by hardening of the light-receiving adhesive;

adjusting a wedge angle ($\rho$p) of a light-projecting positioning shim (4211), which is a positioning shim interposed at the light-projecting positioning location so that the projection optical axis and the light-receiving axis are aligned with each other, in accordance with the projection error angle;

adjusting a wedge angle ($\rho$r) of a light-receiving positioning shim (3411), which is a positioning shim interposed at the light-receiving positioning location so that the projection optical axis and the light-receiving axis are aligned with each other, in accordance with the light-receiving error angle;

fixing the projection-positioning surface of the light source module to which the projection lens module is bonded to the sensor base by positioning the projection-positioning surface by the light-projecting positioning shim using the light-emitting base surface; and

fixing the receiving-positioning surface of the light-receiving detection module to which the light-receiving lens module is bonded to the sensor base by positioning the receiving-positioning surface by the light-receiving positioning shim using the light-receiving base surface.

**32**

# FIG. 1

EP 4 667 965 A1

**FIG. 2**

9

21

26, 261   221 220

22

Bp   0p

Y
Z   X

**FIG. 3**

22

220

24
24
24
24
226   24

Y
Z   X

# FIG. 4

41

45

451 450

42, 421

Br

Or

Y

X

Z

# FIG. 5

45

460 — 46

460 — 46

460 — 46

460 — 46

460 — 46

460 — 46

460 — 46

450

456

Y

Z

X

FIG. 6

EP 4 667 965 A1

# FIG. 7

# FIG. 8

START

| | |
|---|---|
| PROJECTION SETTING | S101 |
| PROJECTION MEASUREMENT | S102 |
| PROJECTION ADHESIVE | S103 |
| PROJECTION POSITIONING | S104 |

END

# FIG. 9

264    Pp    1, 2

21

260 } 26
261 }

Dp

210  224

226

Cp, Cp0

X  Dp

22 { 220
     221

Np

222    1, 3    3a

# FIG. 10

# FIG. 11

# FIG. 12

# FIG. 13

```
        START

LIGHT-RECEIVING SETTING          S201

LIGHT-RECEIVING
MEASUREMENT                      S202

LIGHT-RECEIVING ADHESION         S203

LIGHT-RECEIVING
POSITIONING                      S204

        END
```

# FIG. 14

# FIG. 15

# FIG. 16

# FIG. 17

EP 4 667 965 A1

FIG. 18

# FIG. 19

FIG. 20

# FIG. 21

```
                    ┌──────────────┐
                    │    START     │
                    └──────┬───────┘
         ┌─────────────────┴──────────────────┐
         │                                    │
┌────────┴──────────┐ S101      ┌─────────────┴──────────┐ S201
│ PROJECTION SETTING│           │ LIGHT-RECEIVING SETTING│
└────────┬──────────┘           └─────────────┬──────────┘
         │                                    │
┌────────┴──────────────┐ S102   ┌────────────┴──────────┐ S202
│ PROJECTION MEASUREMENT│        │   LIGHT-RECEIVING     │
└────────┬──────────────┘        │     MEASUREMENT       │
         │                       └────────────┬──────────┘
┌────────┴──────────────┐ S103   ┌────────────┴──────────────┐ S203
│  PROJECTION ADHESIVE  │        │  LIGHT-RECEIVING ADHESION │
└────────┬──────────────┘        └────────────┬──────────────┘
         │                                    │
┌────────┴──────────┐ S3104     ┌─────────────┴──────────┐ S3204
│  ADDED PROJECTION │           │  ADDED LIGHT-RECEIVING │
│    MEASUREMENT    │           │      MEASUREMENT       │
└────────┬──────────┘           └─────────────┬──────────┘
         │                                    │
         └──────────────────────────────────►│
┌────────┴────────────────┐ S3105  ┌──────────┴──────────┐ S3205
│ PROJECTION POSITIONING  │        │   LIGHT-RECEIVING   │
└────────┬────────────────┘        │   SHIM-ADJUSTMENT   │
         │                         └──────────┬──────────┘
   ┌─────┴──────┐                             │
   │    END     │                  ┌──────────┴──────────┐ S3206
   └────────────┘                  │   LIGHT-RECEIVING   │
                                   │     POSITIONING     │
                                   └──────────┬──────────┘
                                        ┌─────┴──────┐
                                        │    END     │
                                        └────────────┘
```

49

# FIG. 22

# FIG. 23

# FIG. 24

# FIG. 25

FIG. 26

EP 4 667 965 A1

# FIG. 27

# FIG. 28

# FIG. 29

START

PROJECTION SETTING — S101

LIGHT-RECEIVING SETTING — S201

PROJECTION MEASUREMENT — S102

LIGHT-RECEIVING MEASUREMENT — S202

PROJECTION ADHESIVE — S103

LIGHT-RECEIVING ADHESION — S203

ADDED PROJECTION MEASUREMENT — S3104

ADDED LIGHT-RECEIVING MEASUREMENT — S3204

PROJECTION-SHIM ADJUSTMENT — S4105

LIGHT-RECEIVING POSITIONING — S4205

PROJECTION POSITIONING — S4106

END

END

FIG. 30

EP 4 667 965 A1

# FIG. 31

# FIG. 32

# FIG. 33

```
                    ┌──────────────┐
                    │    START     │
                    └──────┬───────┘
        ┌──────────────────┴──────────────────┐
        │                                      │
┌───────────────────────┐ S101    ┌───────────────────────┐ S201
│  PROJECTION SETTING    │         │ LIGHT-RECEIVING SETTING │
└───────────┬───────────┘         └───────────┬───────────┘
┌───────────────────────┐ S102    ┌───────────────────────┐ S202
│ PROJECTION MEASUREMENT │         │    LIGHT-RECEIVING      │
│                        │         │     MEASUREMENT         │
└───────────┬───────────┘         └───────────┬───────────┘
┌───────────────────────┐ S103    ┌───────────────────────┐ S203
│  PROJECTION ADHESIVE   │         │ LIGHT-RECEIVING ADHESION│
└───────────┬───────────┘         └───────────┬───────────┘
┌───────────────────────┐ S3104   ┌───────────────────────┐ S3204
│   ADDED PROJECTION     │         │  ADDED LIGHT-RECEIVING  │
│    MEASUREMENT         │         │     MEASUREMENT         │
└───────────┬───────────┘         └───────────┬───────────┘
┌───────────────────────┐ S5105   ┌───────────────────────┐ S5205
│   PROJECTION-SHIM      │         │    LIGHT-RECEIVING      │
│    ADJUSTMENT          │         │   SHIM-ADJUSTMENT       │
└───────────┬───────────┘         └───────────┬───────────┘
┌───────────────────────┐ S4106   ┌───────────────────────┐ S3206
│ PROJECTION POSITIONING │         │    LIGHT-RECEIVING      │
│                        │         │     POSITIONING         │
└───────────┬───────────┘         └───────────┬───────────┘
        ▼                                  ▼
  ┌──────────┐                       ┌──────────┐
  │   END    │                       │   END    │
  └──────────┘                       └──────────┘
```

## INTERNATIONAL SEARCH REPORT

| International application No. |
| --- |
| **PCT/JP2023/034454** |

| | |
| --- | --- |
| **A.** | **CLASSIFICATION OF SUBJECT MATTER** |
| | ***G01S 7/481***(2006.01)i; ***G01S 7/497***(2006.01)i |
| | FI:   G01S7/497; G01S7/481 Z |

According to International Patent Classification (IPC) or to both national classification and IPC

| | |
| --- | --- |
| **B.** | **FIELDS SEARCHED** |

Minimum documentation searched (classification system followed by classification symbols)

G01S7/48-G01S7/51; G01S17/00-G01S17/95; G01C3/00- G01C3/32

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2021-148514 A (RICOH CO., LTD.) 27 September 2021 (2021-09-27)<br>    paragraphs [0005], [0044], [0045], [0050]-[0082], fig. 11-15 | 1-5, 7-9, 11-14, 16-17 |
| Y | paragraphs [0005], [0044], [0045], [0050]-[0082], fig. 11-15 | 6, 10, 15 |
| Y | JP 10-177068 A (MITSUBISHI ELECTRIC CORPORATION) 30 June 1998 (1998-06-30)<br>    paragraph [0011], fig. 5 | 6, 15 |
| Y | JP 2016-61567 A (CANON KABUSHIKI KAISHA) 25 April 2016 (2016-04-25)<br>    paragraphs [0021]-[0025] | 10 |
| A | WO 2022/024325 A1 (MITSUBISHI ELECTRIC CORPORATION) 03 February 2022<br>(2022-02-03)<br>    entire text, all drawings | 1-20 |
| A | US 10295660 B1 (PANOSENSE INC.) 21 May 2019 (2019-05-21)<br>    entire text, all drawings | 1-20 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 November 2023** | **21 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/034454**

| Patent document cited in search report | | | Publication date (day/month/year) | Patent family member(s) | Publication date (day/month/year) |
|---|---|---|---|---|---|
| JP | 2021-148514 | A | 27 September 2021 | (Family: none) | |
| JP | 10-177068 | A | 30 June 1998 | (Family: none) | |
| JP | 2016-61567 | A | 25 April 2016 | US 2016/0076881 A1 paragraphs [0033]-[0037] | |
| WO | 2022/024325 | A1 | 03 February 2022 | (Family: none) | |
| US | 10295660 | B1 | 21 May 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023021054 A
- JP 2023151638 A
- JP 2017003938 A